# EUROPEAN PATENT SPECIFICATION

(11) **EP 4 187 820 B1**
(45) Date of publication and mention of the grant of the patent: **28.01.2026**
(21) Application number: 21855402.0
(22) Date of filing: 02.08.2021
(51) Int. Cl.: H04L 1/16, H04L 1/18, H04L 1/1607

(54) **METHODS AND DEVICES FOR INDICATING AND DETERMINING SEQUENCE NUMBER**
VERFAHREN UND VORRICHTUNGEN ZUR ANZEIGE UND BESTIMMUNG EINER SEQUENZNUMMER
PROCÉDÉS ET DISPOSITIFS D'INDICATION ET DE DÉTERMINATION D'UN NUMÉRO DE SÉQUENCE

(30) Priority: 10.08.2020 CN 202010796844
(43) Date of publication of application: 31.05.2023
(73) Proprietor: Huawei Technologies Co., Ltd., Shenzhen, Guangdong 518129 (CN)
(72) Inventor: XU, Bin, Shenzhen, Guangdong 518129 (CN); LI, Chenwan, Shenzhen, Guangdong 518129 (CN); CHEN, Lei, Shenzhen, Guangdong 518129 (CN); LIN, Bo, Shenzhen, Guangdong 518129 (CN)
(74) Representative: Pfenning, Meinig & Partner mbB
(86) International application number: PCT/CN2021/110144
(87) International publication number: WO 2022/033349

(56) References cited:
- EP-A1- 2 675 196
- EP-A1- 3 557 801
- WO-A1-2019/085042
- CN-A- 102 076 033
- CN-A- 109 327 833
- CN-A- 110 868 744

## Description

### TECHNICAL FIELD

This application relates to the field of communications technologies, and in particular, to a serial number indication method and determining method, and an apparatus.

### BACKGROUND

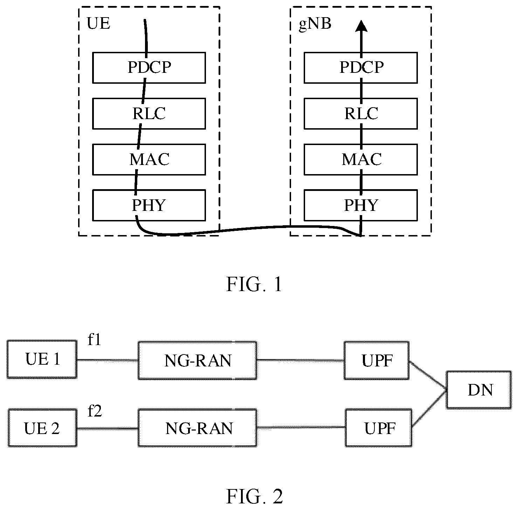

In wireless communication, a radio link control (radio link control, RLC) layer is located between a media access control (media access control, MAC) layer and a packet data convergence protocol (packet data convergence protocol, PDCP) layer. FIG. 1 is a schematic diagram of a structure of protocol stacks in an uplink transmission (where data is transmitted from a terminal to a next generation NodeB (next generation NodeB, gNB)) scenario. Data is transmitted in a direction shown by an arrow. In downlink transmission, data is processed by the protocol stacks in a direction opposite to that in the uplink transmission. When the data passes through each layer, the data is processed by the corresponding protocol layer, and then a data packet header of the corresponding protocol layer is added to the data. For example, the data is processed by a PDCP layer through security processing and header compression processing, and then a PDCP header is added to the data. The data is processed by an RLC layer, and then an RLC layer header is added to the data. When a service data unit (service data unit, SDU) of each protocol stack is segmented during sending, a data packet header of each protocol layer usually carries a corresponding serial number (serial number, SN) of the layer, so that each layer at a receiving end processes a data packet based on the corresponding SN.

In some application scenarios, for example, in industrial scenarios, service transmission requires high reliability, and accordingly requires high reliability for devices. Once a fault occurs in a device, service transmission cannot be ensured. Currently, a network A/B solution is used. FIG. 2 is a schematic diagram of a structure of a network A/B. A main idea of the network A/B solution is to deploy two access network devices (an NG-RAN 1 and an NG-RAN 2), and the two devices are respectively referred to as a device on the network A and a device on the network B. When a fault occurs in the device on the network A, the device on the network B is enabled to continue service transmission. However, two communication frequencies need to be deployed on the network A/B, resulting in a waste of scarce frequency resources. In addition, service switching between the two devices is time-consuming, and causes a loss of a large quantity of data packets. This reduces communication reliability.

WO 2019/085042 describes a communication method that includes: a first base station and a second base station establishing different communication links to a user equipment; when receiving communication status information of the user equipment, one of the first base station and the second base station transmitting the communication status information to the other of the first base station and the second base station, in such a way that the other of the first base station and the second base station performs operations corresponding to the communication status information.

EP 2675196 describes an internet of things information processing method that includes: receiving, by a base station, uplink data sent from an internet of things terminal; if the uplink data meets a local decision condition of the base station, performing, by the base station, local decision processing according to the uplink data. In the embodiments of the present invention, a base station that is comparatively close to the internet of things terminal is adopted to perform local decision processing, which can shorten latency of decision processing and ensure service quality of the internet of things.

EP3557801 describes a method and apparatus that implement segment retransmission and reduce data packet transmission latency.

### SUMMARY

This application provides a serial number indication method and determining method, and an apparatus, to accurately determine a serial number in an RLC entity, so that communication reliability is improved. The scope of protection of the present invention is defined by the subject-matter of the appended claims.

According to a first aspect, a serial number indication method is provided. The method includes: A first terminal apparatus receives first indication information from a first network apparatus, where the first indication information indicates the first terminal apparatus to report a first serial number in a radio link control RLC entity. The first terminal apparatus sends the first serial number in the RLC entity to the first network apparatus based on the first indication information, where the first serial number is used to indicate a start serial number in an RLC entity of the first network apparatus. In this aspect, the first terminal apparatus reports the first serial number in the RLC entity based on the indication of the first network apparatus, and the first network apparatus may determine the start serial number in the RLC entity of the first network apparatus based on the first serial number. In this way, a serial number in the RLC entity of the first network apparatus is aligned with a serial number in the RLC entity of the first terminal apparatus, so that the first terminal apparatus can perform accurate combination based on the aligned serial numbers when receiving a data packet sent by the first network apparatus. This improves communication reliability.

With reference to the first aspect, in a possible implementation, before the first terminal apparatus receives the first indication information from the first network apparatus, a fault occurs in a second network apparatus, where the second network apparatus is a network apparatus that communicates with the first terminal apparatus before the fault occurs. In this implementation, when the fault occurs in the second network apparatus, and the first network apparatus takes over a service of the second network apparatus, the first network apparatus indicates the first terminal apparatus to report the first serial number in the RLC entity.

With reference to the first aspect, in another possible implementation, the first serial number is a largest value in serial numbers in the RLC entity of the first terminal apparatus. In this implementation, the first serial number is the largest value in the serial numbers in the RLC entity of the first terminal apparatus, so that the first network apparatus starts setting from a next serial number of the largest value in the serial numbers. In this way, a serial number in the RLC entity of the first network apparatus can be aligned with a serial number in the RLC entity of the first terminal apparatus.

According to a second aspect, a serial number indication method is provided. The method includes: A first network apparatus sends first indication information to a first terminal apparatus, where the first indication information indicates the first terminal apparatus to report a first serial number in a radio link control RLC entity. The first network apparatus receives the first serial number in the RLC entity from the first terminal apparatus. The first network apparatus determines a start serial number in an RLC entity of the first network apparatus based on the first serial number.

With reference to the second aspect, in a possible implementation, before that a first network apparatus sends first indication information to a first terminal apparatus, the method further includes: The first network apparatus detects that a fault occurs in a second network apparatus, where the second network apparatus is a network apparatus that communicates with the first terminal apparatus before the fault occurs.

With reference to the second aspect, in another possible implementation, the first serial number is a largest value in serial numbers in the RLC entity of the first terminal apparatus.

According to a third aspect, a serial number indication method is provided. The method includes: A first network apparatus receives first information from a second network apparatus, where the first information includes a second serial number. The first network apparatus determines a start serial number in an RLC entity of the first network apparatus based on the second serial number. In this aspect, when a fault does not occur in the second network apparatus, the second network apparatus sends the second serial number to the first network apparatus, and the first network apparatus determines the start serial number in the RLC entity of the first network apparatus based on the second serial number. In this way, when the fault occurs in the second network apparatus, and the first network apparatus takes over the second network apparatus, a serial number in the RLC entity of the first network apparatus can be aligned with a serial number in an RLC entity of the first terminal apparatus, so that the first terminal apparatus can perform accurate combination based on the aligned serial numbers when receiving a data packet sent by the first network apparatus. This improves communication reliability.

With reference to the third aspect, in a possible implementation, the second serial number is a largest value in serial numbers in an RLC entity of the second network apparatus. In this implementation, the second serial number is the largest value in the serial numbers in the RLC entity of the second network apparatus, so that after the first network apparatus takes over the second network apparatus, the first network apparatus starts setting from a next serial number of the largest value in the serial numbers. In this way, a serial number in the RLC entity of the first network apparatus can be aligned with a serial number in the RLC entity of the first terminal apparatus.

According to a fourth aspect, a serial number indication method is provided. The method includes: A second network apparatus sends first information to a first network apparatus, where the first information includes a second serial number, and the second serial number is used to indicate a start serial number in an RLC entity of the first network apparatus.

With reference to the fourth aspect, in a possible implementation, that a second network apparatus sends first information to a first network apparatus includes: The second network apparatus sends the first information to the first network apparatus when a largest serial number in an RLC entity of the second network apparatus is updated. In this implementation, each time the largest serial number in the RLC entity of the second network apparatus is updated, the second network apparatus sends the first information to the first network apparatus, so that the first network apparatus can obtain the second serial number in a timely manner. In this way, the first network apparatus can accurately align a serial number in the RLC entity of the first network apparatus with a serial number in the RLC entity of the first terminal apparatus based on the latest second serial number.

According to a fifth aspect, a serial number indication method is provided. The method includes: A first terminal apparatus periodically sends second information to a first network apparatus, where the second information includes a first serial number in an RLC entity, and the first serial number is used to indicate a start serial number in an RLC entity of the first network apparatus. In this aspect, the first terminal apparatus periodically sends the first serial number in the RLC entity to the first network apparatus, and the first network apparatus may determine the start serial number in the RLC entity of the first network apparatus based on the first serial number. In this way, a serial number in the RLC entity of the first network apparatus is aligned with a serial number in the RLC entity of the first terminal apparatus, so that the first terminal apparatus can perform accurate combination based on the aligned serial numbers when receiving a data packet sent by the first network apparatus. This improves communication reliability.

With reference to the fifth aspect, in a possible implementation, the method further includes: The first terminal apparatus starts a timer. After the timer expires, the first terminal apparatus sends the second information to the first network apparatus. The first terminal apparatus restarts the timer. In this implementation, the timer is set, so that the first terminal apparatus may periodically send the first serial number in the RLC entity to the first network apparatus in a timely manner.

With reference to the fifth aspect, in another possible implementation, the first serial number is a largest value in serial numbers in the RLC entity of the first terminal apparatus. In this implementation, the first serial number is the largest value in the serial numbers in the RLC entity of the first terminal apparatus, so that the first network apparatus starts setting from a next serial number of the largest value in the serial numbers. In this way, a serial number in the RLC entity of the first network apparatus can be aligned with a serial number in the RLC entity of the first terminal apparatus.

According to a sixth aspect, a serial number indication method is provided. The method includes: A first network apparatus receives second information periodically sent by a first terminal apparatus, where the second information includes a first serial number in an RLC entity. The first network apparatus determines a start serial number in an RLC entity of the first network apparatus based on the first serial number.

With reference to the sixth aspect, in a possible implementation, the first serial number is a largest value in serial numbers in the RLC entity of the first terminal apparatus.

According to a seventh aspect, a serial number indication method is provided. The method includes: A first terminal apparatus receives third indication information from a first network apparatus, where the third indication information indicates RLC entity reestablishment or RLC entity resetting. The first terminal apparatus performs, based on the third indication information, at least one of the following operations: initializing an RLC variable, initializing an RLC timer, clearing a buffer of an RLC entity, or discarding a data packet. In this aspect, the first terminal apparatus initializes the RLC variable, clears the buffer of the RLC entity, or discards the data packet based on the indication information of the first network apparatus. In this way, a serial number in the RLC entity of the first terminal apparatus is aligned with a serial number in an RLC entity of the first network apparatus, so that the first terminal apparatus can perform accurate combination based on the aligned serial numbers when receiving a data packet sent by the first network apparatus. This improves communication reliability.

With reference to the seventh aspect, in a possible implementation, the third indication information is any one of the following: RRC signaling, a PDCP control PDU, an RLC control PDU, a MAC CE, or DCI.

With reference to the seventh aspect, in another possible implementation, before the first terminal apparatus receives the third indication information from the first network apparatus, a fault occurs in a second network apparatus, where the second network apparatus is a network apparatus that communicates with the first terminal apparatus before the fault occurs.

According to an eighth aspect, an indication information sending method is provided. The method includes: A first network apparatus sends third indication information to a first terminal apparatus, where the third indication information indicates RLC entity reestablishment or RLC entity resetting.

With reference to the eighth aspect, in a possible implementation, before that a first network apparatus sends third indication information to a first terminal apparatus, the method further includes: The first network apparatus detects that a fault occurs in a second network apparatus, where the second network apparatus is a network apparatus that communicates with the first terminal apparatus before the fault occurs.

According to a ninth aspect, a serial number determining method is provided. The method includes: A network apparatus determines a first data packet. The network apparatus determines, based on a packet data convergence protocol PDCP serial number corresponding to the first data packet, a radio link control RLC serial number corresponding to the first data packet. The network apparatus adds the RLC serial number to an RLC header corresponding to the first data packet. The network apparatus sends the first data packet. In this aspect, the network apparatus determines, based on the PDCP serial number corresponding to the first data packet, the RLC serial number corresponding to the first data packet. In this way, an RLC layer and a PDCP layer of the network apparatus process serial numbers in a consistent manner. When a fault occurs in the network apparatus, a case in which an RLC layer of a terminal apparatus receives a first data packet corresponding to a repeated serial number, and discards the first data packet does not occur. This improves communication reliability.

With reference to the ninth aspect, in a possible implementation, that the network apparatus determines, based on a PDCP serial number corresponding to the first data packet, an RLC serial number corresponding to the first data packet includes: The RLC serial number is equal to the PDCP serial number, or an offset value between the RLC serial number and the PDCP serial number is N, where N is an integer. In this implementation, the network apparatus and the terminal apparatus each determine, based on the PDCP serial number corresponding to the first data packet, the RLC serial number corresponding to the first data packet. In this way, a case in which the terminal apparatus considers that a first data packet corresponding to a repeated serial number is received, and discards the first data packet does not occur. This improves communication reliability.

With reference to the ninth aspect, in another possible implementation, the method further includes: The network apparatus sends second indication information to the terminal apparatus, where the second indication information indicates that a data packet corresponding to at least one RLC serial number cannot be sent, or indicates the terminal apparatus to ignore receiving of the data packet corresponding to the at least one RLC serial number. In this implementation, after a packet loss occurs at an upper layer of the RLC layer, the RLC layer of the network apparatus skips a serial number when setting a serial number of an RLC entity. In this case, in an AM RLC mode, the terminal apparatus detects that a data packet corresponding to a serial number is lost. In this case, the terminal apparatus sends a feedback message to the network apparatus to request retransmission. In addition, if the lost data packet is not received, the terminal apparatus cannot continue to receive a subsequent data packet. The network apparatus knows that the data packet corresponding to the serial number is lost and cannot be sent successfully, so that the network apparatus sends the second indication information to the terminal apparatus, to indicate that the data packet corresponding to the at least one RLC serial number cannot be sent, or indicate the terminal apparatus to ignore receiving of the data packet corresponding to the at least one RLC serial number. In this case, the terminal apparatus ignores, based on the second indication information, a receiving hole caused by the loss of the data packet corresponding to the at least one RLC serial number, so that the receive window can be moved backward to continue to receive the subsequent data packet.

With reference to the ninth aspect, in another possible implementation, the second indication information is included in an RLC control protocol data unit PDU; or the second indication information is included in an RLC data PDU, where the RLC data PDU includes only a header.

According to a tenth aspect, a serial number determining method is provided. The method includes: A terminal apparatus receives a first data packet from a network apparatus, where an RLC header of the first data packet includes an RLC serial number, and the RLC serial number corresponding to the first data packet is determined based on a packet data convergence protocol PDCP serial number corresponding to the first data packet.

With reference to the tenth aspect, in a possible implementation, the RLC serial number corresponding to the first data packet is equal to the PDCP serial number corresponding to the first data packet, or an offset value between the RLC serial number corresponding to the first data packet and the PDCP serial number corresponding to the first data packet is N, where N is an integer.

With reference to the tenth aspect, in another possible implementation, the method further includes: The terminal apparatus receives second indication information from the network apparatus, where the second indication information indicates that a data packet corresponding to at least one RLC serial number cannot be sent, or indicates the terminal apparatus to ignore receiving of the data packet corresponding to the at least one RLC serial number. The first terminal apparatus determines, based on the second indication information, to ignore the data packet that corresponds to the at least one RLC serial number and that cannot be sent, and continues to slide a receive window backwards.

With reference to the tenth aspect, in another possible implementation, the second indication information is included in an RLC control protocol data unit PDU; or the second indication information is included in an RLC data PDU, where the RLC data PDU includes only a header.

According to an eleventh aspect, a serial number indication apparatus is provided, and is configured to perform the method according to any one of the first aspect or the possible implementations of the first aspect. The serial number indication apparatus may be the terminal device according to any one of the first aspect or the possible implementations of the first aspect, or may be a module used in the terminal device, for example, a chip or a chip system. The serial number indication apparatus includes a corresponding module, unit, or means (means) for implementing the foregoing method. The module, unit, or means may be implemented by hardware, software, or hardware executing corresponding software. The hardware or the software includes at least one module or unit corresponding to the foregoing functions.

With reference to the eleventh aspect, in a possible implementation, the serial number indication apparatus includes a receiving unit and a sending unit. The receiving unit is configured to receive first indication information from a first network apparatus, where the first indication information indicates the first terminal apparatus to report a first serial number in a radio link control RLC entity. The sending unit is configured to send the first serial number in the RLC entity to the first network apparatus based on the first indication information, where the first serial number is used to indicate a start serial number in an RLC entity of the first network apparatus.

With reference to the eleventh aspect, in another possible implementation, the serial number indication apparatus includes an input interface, an output interface, and a processing circuit. The input interface is configured to receive first indication information from a first network apparatus, where the first indication information indicates the first terminal apparatus to report a first serial number in a radio link control RLC entity. The output interface is configured to send the first serial number in the RLC entity to the first network apparatus based on the first indication information, where the first serial number is used to indicate a start serial number in an RLC entity of the first network apparatus.

For example, the serial number indication apparatus further includes a memory. The memory is coupled to at least one processor, and the at least one processor is configured to run program instructions stored in the memory, to enable the serial number indication apparatus to perform the method according to any one of the first aspect or the possible implementations of the first aspect.

In a possible implementation, the memory is configured to store program instructions and data. The memory is coupled to the at least one processor, and the at least one processor may invoke and execute the program instructions stored in the memory, to enable the serial number indication apparatus to perform the method according to any one of the first aspect or the possible implementations of the first aspect.

For example, the serial number indication apparatus further includes a communication interface. The communication interface is used by the serial number indication apparatus to communicate with another device. When the serial number indication apparatus is a terminal, the communication interface is a transceiver, an input/output interface, a circuit, or the like.

In a possible implementation, the serial number indication apparatus includes at least one processor and a communication interface, configured to perform the method according to any one of the first aspect or the possible implementations of the first aspect. Specifically, the at least one processor is configured to communicate with outside through the communication interface. The at least one processor is configured to run a computer program, to enable the serial number indication apparatus to perform the method according to any one of the first aspect or the possible implementations of the first aspect. It may be understood that the outside may be an object other than the processor, or an object other than the serial number indication apparatus.

In another possible design, the serial number indication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the eleventh aspect, refer to technical effects brought by different design manners in the first aspect. Details are not described herein again.

According to a twelfth aspect, a serial number indication apparatus is provided, and is configured to perform the method according to any one of the second aspect or the possible implementations of the second aspect. The serial number indication apparatus may be the first network device according to any one of the second aspect or the possible implementations of the second aspect, or may be a module used in the first network device, for example, a chip or a chip system. The serial number indication apparatus includes a corresponding module, unit, or means for implementing the foregoing method. The module, unit, or means may be implemented by hardware, software, or hardware executing corresponding software. The hardware or the software includes at least one module or unit corresponding to the foregoing functions.

With reference to the twelfth aspect, in a possible implementation, the serial number indication apparatus includes a sending unit, a receiving unit, and a processing unit. The sending unit is configured to send first indication information to a first terminal apparatus, where the first indication information indicates the first terminal apparatus to report a first serial number in a radio link control RLC entity. The receiving unit is configured to receive the first serial number in the RLC entity from the first terminal apparatus. The processing unit is configured to determine a start serial number in an RLC entity of the first network apparatus based on the first serial number.

Optionally, the processing unit is further configured to detect that a fault occurs in a second network apparatus, where the second network apparatus is a network apparatus that communicates with the first terminal apparatus before the fault occurs.

With reference to the twelfth aspect, in another possible implementation, the serial number indication apparatus includes an input interface, an output interface, and a processing circuit. The output interface is configured to send first indication information to a first terminal apparatus, where the first indication information indicates the first terminal apparatus to report a first serial number in a radio link control RLC entity. The input interface is configured to receive the first serial number in the RLC entity from the first terminal apparatus. The processing circuit is configured to determine a start serial number in an RLC entity of the first network apparatus based on the first serial number.

Optionally, the processing circuit is further configured to detect that a fault occurs in a second network apparatus, where the second network apparatus is a network apparatus that communicates with the first terminal apparatus before the fault occurs.

For example, the serial number indication apparatus further includes a memory. The memory is coupled to at least one processor, and the at least one processor is configured to run program instructions stored in the memory, to enable the serial number indication apparatus to perform the method according to any one of the second aspect or the possible implementations of the second aspect.

In a possible implementation, the memory is configured to store program instructions and data. The memory is coupled to the at least one processor, and the at least one processor may invoke and execute the program instructions stored in the memory, to enable the serial number indication apparatus to perform the method according to any one of the second aspect or the possible implementations of the second aspect.

For example, the serial number indication apparatus further includes a communication interface. The communication interface is used by the serial number indication apparatus to communicate with another device. When the serial number indication apparatus is an access network device, the communication interface is a transceiver, an input/output interface, a circuit, or the like.

In a possible implementation, the serial number indication apparatus includes at least one processor and a communication interface, configured to perform the method according to any one of the second aspect or the possible implementations of the second aspect. Specifically, the at least one processor is configured to communicate with outside through the communication interface. The at least one processor is configured to run a computer program, to enable the serial number indication apparatus to perform the method according to any one of the second aspect or the possible implementations of the second aspect. It may be understood that the outside may be an object other than the processor, or an object other than the serial number indication apparatus.

In another possible design, the serial number indication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the twelfth aspect, refer to technical effects brought by different design manners in the second aspect. Details are not described herein again.

According to a thirteenth aspect, a serial number indication apparatus is provided, and is configured to perform the method according to any one of the third aspect or the possible implementations of the third aspect. The serial number indication apparatus may be the terminal device according to any one of the third aspect or the possible implementations of the third aspect, or may be a module used in the terminal device, for example, a chip or a chip system. The serial number indication apparatus includes a corresponding module, unit, or means (means) for implementing the foregoing method. The module, unit, or means may be implemented by hardware, software, or hardware executing corresponding software. The hardware or the software includes at least one module or unit corresponding to the foregoing functions.

With reference to the thirteenth aspect, in a possible implementation, the serial number indication apparatus includes a receiving unit and a processing unit. The receiving unit is configured to receive first information from a second network apparatus, where the first information includes a second serial number. The processing unit is configured to determine a start serial number in an RLC entity of the first network apparatus based on the second serial number.

With reference to the thirteenth aspect, in another possible implementation, the serial number indication apparatus includes an input interface, an output interface, and a processing circuit. The input interface is configured to receive first information from a second network apparatus, where the first information includes a second serial number. The processing circuit is configured to determine a start serial number in an RLC entity of the first network apparatus based on the second serial number.

For example, the serial number indication apparatus further includes a memory. The memory is coupled to at least one processor, and the at least one processor is configured to run program instructions stored in the memory, to enable the serial number indication apparatus to perform the method according to any one of the third aspect or the possible implementations of the third aspect.

In a possible implementation, the memory is configured to store program instructions and data. The memory is coupled to the at least one processor, and the at least one processor may invoke and execute the program instructions stored in the memory, to enable the serial number indication apparatus to perform the method according to any one of the third aspect or the possible implementations of the third aspect.

For example, the serial number indication apparatus further includes a communication interface. The communication interface is used by the serial number indication apparatus to communicate with another device. When the serial number indication apparatus is a terminal, the communication interface is a transceiver, an input/output interface, a circuit, or the like.

In a possible implementation, the serial number indication apparatus includes at least one processor and a communication interface, configured to perform the method according to any one of the third aspect or the possible implementations of the third aspect. Specifically, the at least one processor is configured to communicate with outside through the communication interface. The at least one processor is configured to run a computer program, to enable the serial number indication apparatus to perform the method according to any one of the third aspect or the possible implementations of the third aspect. It may be understood that the outside may be an object other than the processor, or an object other than the serial number indication apparatus.

In another possible design, the serial number indication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the thirteenth aspect, refer to technical effects brought by different design manners in the third aspect. Details are not described herein again.

According to a fourteenth aspect, a serial number indication apparatus is provided, and is configured to perform the method according to any one of the fourth aspect or the possible implementations of the fourth aspect. The serial number indication apparatus may be the first network device according to any one of the fourth aspect or the possible implementations of the fourth aspect, or may be a module used in the first network device, for example, a chip or a chip system. The serial number indication apparatus includes a corresponding module, unit, or means for implementing the foregoing method. The module, unit, or means may be implemented by hardware, software, or hardware executing corresponding software. The hardware or the software includes at least one module or unit corresponding to the foregoing functions.

With reference to the fourteenth aspect, in a possible implementation, the serial number indication apparatus includes a sending unit. The sending unit is configured to send first information to a first network apparatus, where the first information includes a second serial number, and the second serial number is used to indicate a start serial number in an RLC entity of the first network apparatus.

Optionally, the sending unit is specifically configured to send the first information to the first network apparatus when a largest serial number in an RLC entity of the apparatus is updated.

With reference to the fourteenth aspect, in another possible implementation, the serial number indication apparatus includes an input interface, an output interface, and a processing circuit. The output interface is configured to send first information to a first network apparatus, where the first information includes a second serial number, and the second serial number is used to indicate a start serial number in an RLC entity of the first network apparatus.

Optionally, the output interface is specifically configured to send the first information to the first network apparatus when a largest serial number in an RLC entity of the apparatus is updated.

For example, the serial number indication apparatus further includes a memory. The memory is coupled to at least one processor, and the at least one processor is configured to run program instructions stored in the memory, to enable the serial number indication apparatus to perform the method according to any one of the fourth aspect or the possible implementations of the fourth aspect.

In a possible implementation, the memory is configured to store program instructions and data. The memory is coupled to the at least one processor, and the at least one processor may invoke and execute the program instructions stored in the memory, to enable the serial number indication apparatus to perform the method according to any one of the fourth aspect or the possible implementations of the fourth aspect.

For example, the serial number indication apparatus further includes a communication interface. The communication interface is used by the serial number indication apparatus to communicate with another device. When the serial number indication apparatus is an access network device, the communication interface is a transceiver, an input/output interface, a circuit, or the like.

In a possible implementation, the serial number indication apparatus includes at least one processor and a communication interface, configured to perform the method according to any one of the fourth aspect or the possible implementations of the fourth aspect. Specifically, the at least one processor is configured to communicate with outside through the communication interface. The at least one processor is configured to run a computer program, to enable the serial number indication apparatus to perform the method according to any one of the fourth aspect or the possible implementations of the fourth aspect. It may be understood that the outside may be an object other than the processor, or an object other than the serial number indication apparatus.

In another possible design, the serial number indication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the fourteenth aspect, refer to technical effects brought by different design manners in the fourth aspect. Details are not described herein again.

According to a fifteenth aspect, a serial number indication apparatus is provided, and is configured to perform the method according to any one of the fifth aspect or the possible implementations of the fifth aspect. The serial number indication apparatus may be the terminal device according to any one of the fifth aspect or the possible implementations of the fifth aspect, or may be a module used in the terminal device, for example, a chip or a chip system. The serial number indication apparatus includes a corresponding module, unit, or means (means) for implementing the foregoing method. The module, unit, or means may be implemented by hardware, software, or hardware executing corresponding software. The hardware or the software includes at least one module or unit corresponding to the foregoing functions.

With reference to the fifteenth aspect, in a possible implementation, the serial number indication apparatus includes a sending unit. The sending unit is configured to periodically send second information to a first network apparatus, where the second information includes a first serial number in an RLC entity, and the first serial number is used to indicate a start serial number in an RLC entity of the first network apparatus.

Optionally, the apparatus further includes a processing unit. The processing unit is configured to start a timer. The sending unit is specifically configured to send the second information to the first network apparatus after the timer expires. The processing unit is further configured to restart the timer.

With reference to the fifteenth aspect, in another possible implementation, the serial number indication apparatus includes an input interface, an output interface, and a processing circuit. The output interface is configured to periodically send second information to a first network apparatus, where the second information includes a first serial number in an RLC entity, and the first serial number is used to indicate a start serial number in an RLC entity of the first network apparatus.

Optionally, the processing circuit is configured to start a timer. The output interface is specifically configured to send the second information to the first network apparatus after the timer expires. The processing circuit is further configured to restart the timer.

For example, the serial number indication apparatus further includes a memory. The memory is coupled to at least one processor, and the at least one processor is configured to run program instructions stored in the memory, to enable the serial number indication apparatus to perform the method according to any one of the fifth aspect or the possible implementations of the fifth aspect.

In a possible implementation, the memory is configured to store program instructions and data. The memory is coupled to the at least one processor, and the at least one processor may invoke and execute the program instructions stored in the memory, to enable the serial number indication apparatus to perform the method according to any one of the fifth aspect or the possible implementations of the fifth aspect.

For example, the serial number indication apparatus further includes a communication interface. The communication interface is used by the serial number indication apparatus to communicate with another device. When the serial number indication apparatus is a terminal, the communication interface is a transceiver, an input/output interface, a circuit, or the like.

In a possible implementation, the serial number indication apparatus includes at least one processor and a communication interface, configured to perform the method according to any one of the fifth aspect or the possible implementations of the fifth aspect. Specifically, the at least one processor is configured to communicate with outside through the communication interface. The at least one processor is configured to run a computer program, to enable the serial number indication apparatus to perform the method according to any one of the fifth aspect or the possible implementations of the fifth aspect. It may be understood that the outside may be an object other than the processor, or an object other than the serial number indication apparatus.

In another possible design, the serial number indication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the fifteenth aspect, refer to technical effects brought by different design manners in the fifth aspect. Details are not described herein again.

According to a sixteenth aspect, a serial number indication apparatus is provided, and is configured to perform the method according to any one of the sixth aspect or the possible implementations of the sixth aspect. The serial number indication apparatus may be the first network device according to any one of the sixth aspect or the possible implementations of the sixth aspect, or may be a module used in the first network device, for example, a chip or a chip system. The serial number indication apparatus includes a corresponding module, unit, or means for implementing the foregoing method. The module, unit, or means may be implemented by hardware, software, or hardware executing corresponding software. The hardware or the software includes at least one module or unit corresponding to the foregoing functions.

With reference to the sixteenth aspect, in a possible implementation, the serial number indication apparatus includes a receiving unit and a processing unit. The receiving unit is configured to receive second information periodically sent by a first terminal apparatus, where the second information includes a first serial number in an RLC entity. The processing unit is configured to determine a start serial number in an RLC entity of the first network apparatus based on the first serial number.

With reference to the sixteenth aspect, in another possible implementation, the serial number indication apparatus includes an input interface, an output interface, and a processing circuit. The input interface is configured to receive second information periodically sent by a first terminal apparatus, where the second information includes a first serial number in an RLC entity. The processing circuit is configured to determine a start serial number in an RLC entity of the first network apparatus based on the first serial number.

For example, the serial number indication apparatus further includes a memory. The memory is coupled to at least one processor, and the at least one processor is configured to run program instructions stored in the memory, to enable the serial number indication apparatus to perform the method according to any one of the sixth aspect or the possible implementations of the sixth aspect.

In a possible implementation, the memory is configured to store program instructions and data. The memory is coupled to the at least one processor, and the at least one processor may invoke and execute the program instructions stored in the memory, to enable the serial number indication apparatus to perform the method according to any one of the sixth aspect or the possible implementations of the sixth aspect.

For example, the serial number indication apparatus further includes a communication interface. The communication interface is used by the serial number indication apparatus to communicate with another device. When the serial number indication apparatus is an access network device, the communication interface is a transceiver, an input/output interface, a circuit, or the like.

In a possible implementation, the serial number indication apparatus includes at least one processor and a communication interface, configured to perform the method according to any one of the sixth aspect or the possible implementations of the sixth aspect. Specifically, the at least one processor is configured to communicate with outside through the communication interface. The at least one processor is configured to run a computer program, to enable the serial number indication apparatus to perform the method according to any one of the sixth aspect or the possible implementations of the sixth aspect. It may be understood that the outside may be an object other than the processor, or an object other than the serial number indication apparatus.

In another possible design, the serial number indication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the sixteenth aspect, refer to technical effects brought by different design manners in the sixth aspect. Details are not described herein again.

According to a seventeenth aspect, a serial number indication apparatus is provided, and is configured to perform the method according to any one of the seventh aspect or the possible implementations of the seventh aspect. The serial number indication apparatus may be the terminal device according to any one of the seventh aspect or the possible implementations of the seventh aspect, or may be a module used in the terminal device, for example, a chip or a chip system. The serial number indication apparatus includes a corresponding module, unit, or means (means) for implementing the foregoing method. The module, unit, or means may be implemented by hardware, software, or hardware executing corresponding software. The hardware or the software includes at least one module or unit corresponding to the foregoing functions.

With reference to the seventeenth aspect, in a possible implementation, the serial number indication apparatus includes a receiving unit and a processing unit. The receiving unit is configured to receive third indication information from a first network apparatus, where the third indication information indicates RLC entity reestablishment or RLC entity resetting. The processing unit is configured to perform, based on the third indication information, at least one of the following operations: initializing an RLC variable, initializing an RLC timer, clearing a buffer of an RLC entity, or discarding a data packet.

With reference to the seventeenth aspect, in another possible implementation, the serial number indication apparatus includes an input interface, an output interface, and a processing circuit. The input interface is configured to receive third indication information from a first network apparatus, where the third indication information indicates RLC entity reestablishment or RLC entity resetting. The processing circuit is configured to perform, based on the third indication information, at least one of the following operations: initializing an RLC variable, clearing a buffer of an RLC entity, or discarding a data packet.

For example, the serial number indication apparatus further includes a memory. The memory is coupled to at least one processor, and the at least one processor is configured to run program instructions stored in the memory, to enable the serial number indication apparatus to perform the method according to any one of the seventh aspect or the possible implementations of the seventh aspect.

In a possible implementation, the memory is configured to store program instructions and data. The memory is coupled to the at least one processor, and the at least one processor may invoke and execute the program instructions stored in the memory, to enable the serial number indication apparatus to perform the method according to any one of the seventh aspect or the possible implementations of the seventh aspect.

For example, the serial number indication apparatus further includes a communication interface. The communication interface is used by the serial number indication apparatus to communicate with another device. When the serial number indication apparatus is a terminal, the communication interface is a transceiver, an input/output interface, a circuit, or the like.

In a possible implementation, the serial number indication apparatus includes at least one processor and a communication interface, configured to perform the method according to any one of the seventh aspect or the possible implementations of the seventh aspect. Specifically, the at least one processor is configured to communicate with outside through the communication interface. The at least one processor is configured to run a computer program, to enable the serial number indication apparatus to perform the method according to any one of the seventh aspect or the possible implementations of the seventh aspect. It may be understood that the outside may be an object other than the processor, or an object other than the serial number indication apparatus.

In another possible design, the serial number indication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the seventeenth aspect, refer to technical effects brought by different design manners in the seventh aspect. Details are not described herein again.

According to an eighteenth aspect, a serial number indication apparatus is provided, and is configured to perform the method according to any one of the eighth aspect or the possible implementations of the eighth aspect. The serial number indication apparatus may be the first network device according to any one of the eighth aspect or the possible implementations of the eighth aspect, or may be a module used in the first network device, for example, a chip or a chip system. The serial number indication apparatus includes a corresponding module, unit, or means for implementing the foregoing method. The module, unit, or means may be implemented by hardware, software, or hardware executing corresponding software. The hardware or the software includes at least one module or unit corresponding to the foregoing functions.

With reference to the eighteenth aspect, in a possible implementation, the serial number indication apparatus includes a sending unit. The sending unit is configured to send third indication information to a first terminal apparatus, where the second indication information indicates RLC entity reestablishment or RLC entity resetting.

Optionally, the apparatus further includes a processing unit. The processing unit is configured to detect that a fault occurs in a second network apparatus, where the second network apparatus is a network apparatus that communicates with the first terminal apparatus before the fault occurs.

With reference to the eighteenth aspect, in another possible implementation, the serial number indication apparatus includes an input interface, an output interface, and a processing circuit. The output interface is configured to send third indication information to a first terminal apparatus, where the second indication information indicates RLC entity reestablishment or RLC entity resetting.

Optionally, the processing circuit is configured to detect that a fault occurs in a second network apparatus, where the second network apparatus is a network apparatus that communicates with the first terminal apparatus before the fault occurs.

For example, the serial number indication apparatus further includes a memory. The memory is coupled to at least one processor, and the at least one processor is configured to run program instructions stored in the memory, to enable the serial number indication apparatus to perform the method according to any one of the eighth aspect or the possible implementations of the eighth aspect.

In a possible implementation, the memory is configured to store program instructions and data. The memory is coupled to the at least one processor, and the at least one processor may invoke and execute the program instructions stored in the memory, to enable the serial number indication apparatus to perform the method according to any one of the eighth aspect or the possible implementations of the eighth aspect.

For example, the serial number indication apparatus further includes a communication interface. The communication interface is used by the serial number indication apparatus to communicate with another device. When the serial number indication apparatus is an access network device, the communication interface is a transceiver, an input/output interface, a circuit, or the like.

In a possible implementation, the serial number indication apparatus includes at least one processor and a communication interface, configured to perform the method according to any one of the eighth aspect or the possible implementations of the eighth aspect. Specifically, the at least one processor is configured to communicate with outside through the communication interface. The at least one processor is configured to run a computer program, to enable the serial number indication apparatus to perform the method according to any one of the eighth aspect or the possible implementations of the eighth aspect. It may be understood that the outside may be an object other than the processor, or an object other than the serial number indication apparatus.

In another possible design, the serial number indication apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the eighteenth aspect, refer to technical effects brought by different design manners in the eighth aspect. Details are not described herein again.

According to a nineteenth aspect, a serial number determining apparatus is provided, and is configured to perform the method according to any one of the ninth aspect or the possible implementations of the ninth aspect. The serial number determining apparatus may be the terminal device according to any one of the ninth aspect or the possible implementations of the ninth aspect, or may be a module used in the terminal device, for example, a chip or a chip system. The serial number determining apparatus includes a corresponding module, unit, or means (means) for implementing the foregoing method. The module, unit, or means may be implemented by hardware, software, or hardware executing corresponding software. The hardware or the software includes at least one module or unit corresponding to the foregoing functions.

With reference to the nineteenth aspect, in a possible implementation, the serial number determining apparatus includes a processing unit and a sending unit. The processing unit is configured to determine a first data packet. The processing unit is further configured to determine, based on a packet data convergence protocol PDCP serial number corresponding to the first data packet, a radio link control RLC serial number corresponding to the first data packet. The processing unit is further configured to add the RLC serial number to an RLC header corresponding to the first data packet. The sending unit is configured to send the first data packet.

Optionally, the sending unit is further configured to send second indication information to a terminal apparatus, where the second indication information indicates that a data packet corresponding to at least one RLC serial number cannot be sent, or indicates the terminal apparatus to ignore receiving of the data packet corresponding to the at least one RLC serial number.

With reference to the nineteenth aspect, in another possible implementation, the serial number determining apparatus includes an input interface, an output interface, and a processing circuit. The processing circuit is configured to determine a first data packet. The processing circuit is further configured to determine, based on a packet data convergence protocol PDCP serial number corresponding to the first data packet, a radio link control RLC serial number corresponding to the first data packet. The processing circuit is further configured to add the RLC serial number to an RLC header corresponding to the first data packet. The output interface is configured to send the first data packet.

Optionally, the output interface is further configured to send second indication information to a terminal apparatus, where the second indication information indicates that a data packet corresponding to at least one RLC serial number cannot be sent, or indicates the terminal apparatus to ignore receiving of the data packet corresponding to the at least one RLC serial number.

For example, the serial number determining apparatus further includes a memory. The memory is coupled to at least one processor, and the at least one processor is configured to run program instructions stored in the memory, to enable the serial number determining apparatus to perform the method according to any one of the ninth aspect or the possible implementations of the ninth aspect.

In a possible implementation, the memory is configured to store program instructions and data. The memory is coupled to the at least one processor, and the at least one processor may invoke and execute the program instructions stored in the memory, to enable the serial number determining apparatus to perform the method according to any one of the ninth aspect or the possible implementations of the ninth aspect.

For example, the serial number determining apparatus further includes a communication interface. The communication interface is used by the serial number determining apparatus to communicate with another device. When the serial number determining apparatus is a terminal, the communication interface is a transceiver, an input/output interface, a circuit, or the like.

In a possible implementation, the serial number determining apparatus includes at least one processor and a communication interface, configured to perform the method according to any one of the ninth aspect or the possible implementations of the ninth aspect. Specifically, the at least one processor is configured to communicate with outside through the communication interface. The at least one processor is configured to run a computer program, to enable the serial number determining apparatus to perform the method according to any one of the ninth aspect or the possible implementations of the ninth aspect. It may be understood that the outside may be an object other than the processor, or an object other than the serial number determining apparatus.

In another possible design, the serial number determining apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the nineteenth aspect, refer to technical effects brought by different design manners in the ninth aspect. Details are not described herein again.

According to a twentieth aspect, a serial number determining apparatus is provided, and is configured to perform the method according to any one of the tenth aspect or the possible implementations of the tenth aspect. The serial number determining apparatus may be the first network device according to any one of the tenth aspect or the possible implementations of the tenth aspect, or may be a module used in the first network device, for example, a chip or a chip system. The serial number determining apparatus includes a corresponding module, unit, or means for implementing the foregoing method. The module, unit, or means may be implemented by hardware, software, or hardware executing corresponding software. The hardware or the software includes at least one module or unit corresponding to the foregoing functions.

With reference to the twentieth aspect, in a possible implementation, the serial number determining apparatus includes a receiving unit. The receiving unit is configured to receive a first data packet from a network apparatus, where an RLC header of the first data packet includes an RLC serial number, and the RLC serial number corresponding to the first data packet is determined based on a packet data convergence protocol PDCP serial number corresponding to the first data packet.

Optionally, the apparatus further includes a processing unit. The receiving unit is further configured to receive second indication information from the network apparatus, where the second indication information indicates that a data packet corresponding to at least one RLC serial number cannot be sent, or indicates to ignore receiving of the data packet corresponding to the at least one RLC serial number. The processing unit is configured to: determine, based on the second indication information, to ignore the data packet that corresponds to the at least one RLC serial number and that cannot be sent, and continue to slide a receive window backwards.

With reference to the twentieth aspect, in another possible implementation, the serial number determining apparatus includes an input interface, an output interface, and a processing circuit. The input interface is configured to receive a first data packet from a network apparatus, where an RLC header of the first data packet includes an RLC serial number, and the RLC serial number corresponding to the first data packet is determined based on a packet data convergence protocol PDCP serial number corresponding to the first data packet.

Optionally, the input interface is further configured to receive second indication information from the network apparatus, where the second indication information indicates that a data packet corresponding to at least one RLC serial number cannot be sent, or indicates to ignore receiving of the data packet corresponding to the at least one RLC serial number. The processing circuit is configured to: determine, based on the second indication information, to ignore the data packet that corresponds to the at least one RLC serial number and that cannot be sent, and continue to slide a receive window backwards.

For example, the serial number determining apparatus further includes a memory. The memory is coupled to at least one processor, and the at least one processor is configured to run program instructions stored in the memory, to enable the serial number determining apparatus to perform the method according to any one of the tenth aspect or the possible implementations of the tenth aspect.

In a possible implementation, the memory is configured to store program instructions and data. The memory is coupled to the at least one processor, and the at least one processor may invoke and execute the program instructions stored in the memory, to enable the serial number determining apparatus to perform the method according to any one of the tenth aspect or the possible implementations of the tenth aspect.

For example, the serial number determining apparatus further includes a communication interface. The communication interface is used by the serial number determining apparatus to communicate with another device. When the serial number determining apparatus is an access network device, the communication interface is a transceiver, an input/output interface, a circuit, or the like.

In a possible implementation, the serial number determining apparatus includes at least one processor and a communication interface, configured to perform the method according to any one of the tenth aspect or the possible implementations of the tenth aspect. Specifically, the at least one processor is configured to communicate with outside through the communication interface. The at least one processor is configured to run a computer program, to enable the serial number determining apparatus to perform the method according to any one of the tenth aspect or the possible implementations of the tenth aspect. It may be understood that the outside may be an object other than the processor, or an object other than the serial number determining apparatus.

In another possible design, the serial number determining apparatus is a chip or a chip system. The communication interface may be an input/output interface, an interface circuit, an output circuit, an input circuit, a pin, a related circuit, or the like in the chip or the chip system. The processor may alternatively be a processing circuit or a logic circuit.

For technical effects brought by any design manner in the twentieth aspect, refer to technical effects brought by different design manners in the tenth aspect. Details are not described herein again.

According to a twenty-first aspect, a communication system is provided. The communication system includes the serial number indication apparatus according to any one of the eleventh aspect or the implementations of the eleventh aspect, and the serial number indication apparatus according to any one of the twelfth aspect or the implementations of the twelfth aspect.

According to a twenty-second aspect, a communication system is provided. The communication system includes the serial number indication apparatus according to any one of the thirteenth aspect or the implementations of the thirteenth aspect, and the serial number indication apparatus according to any one of the fourteenth aspect or the implementations of the fourteenth aspect.

According to a twenty-third aspect, a communication system is provided. The communication system includes the serial number indication apparatus according to any one of the fifteenth aspect or the implementations of the fifteenth aspect, and the serial number indication apparatus according to any one of the sixteenth aspect or the implementations of the sixteenth aspect.

According to a twenty-fourth aspect, a communication system is provided. The communication system includes the serial number indication apparatus according to any one of the seventeenth aspect or the implementations of the seventeenth aspect, and the serial number indication apparatus according to any one of the eighteenth aspect or the implementations of the eighteenth aspect.

According to a twenty-fifth aspect, a communication system is provided. The communication system includes the serial number determining apparatus according to any one of the nineteenth aspect or the implementations of the nineteenth aspect, and the serial number determining apparatus according to any one of the twentieth aspect or the implementations of the twentieth aspect.

According to a twenty-sixth aspect, a computer-readable storage medium is provided. The computer-readable storage medium stores a computer program. When the computer program is run on a computer, the method according to any one of the foregoing aspects or the implementations of the foregoing aspects is performed.

According to a twenty-seventh aspect, a computer program product is provided. When the computer program product runs on a computer, the method according to any one of the foregoing aspects or the implementations of the foregoing aspects is performed.

According to a twenty-eighth aspect, a computer program is provided. When the computer program is run on a computer, the method according to any one of the foregoing aspects or the implementations of the foregoing aspects is performed.

### BRIEF DESCRIPTION OF DRAWINGS

FIG. 1 is a schematic diagram of a structure of protocol stacks in an uplink transmission scenario;
FIG. 2 is a schematic diagram of a structure of a network A/B;
FIG. 3 is a schematic diagram of an architecture of a communication system according to an embodiment of this application;
FIG. 4 is a schematic diagram of a structure of a communication apparatus 300 according to an embodiment of this application;
FIG. 5 is a schematic diagram of a structure of fast switching between a primary station and a secondary station;
FIG. 6 is a schematic diagram of a scenario in which a receiving error occurs in a terminal apparatus in an RLC unacknowledged mode because a secondary station cannot accurately determine a start serial number in an RLC entity of the secondary station after takeover;
FIG. 7 is a schematic flowchart of a serial number indication method according to an embodiment of this application;
FIG. 8 is a schematic flowchart of another serial number indication method according to an embodiment of this application;
FIG. 9 is a schematic flowchart of still another serial number indication method according to an embodiment of this application;
FIG. 10 is a schematic flowchart of still another serial number indication method according to an embodiment of this application;
FIG. 11 is a schematic diagram of a scenario in which a receiving error occurs in a terminal apparatus in an RLC acknowledged mode because a serial number in an RLC entity and a serial number in a PDCP entity are separately set after takeover of a secondary station;
FIG. 12 is a schematic flowchart of a serial number determining method according to an embodiment of this application;
FIG. 13 is a schematic diagram of a structure of a serial number indication apparatus according to an embodiment of this application;
FIG. 14 is a schematic diagram of a structure of another serial number indication apparatus according to an embodiment of this application;
FIG. 15 is a schematic diagram of a structure of still another serial number indication apparatus according to an embodiment of this application;
FIG. 16 is a schematic diagram of a structure of still another serial number indication apparatus according to an embodiment of this application;
FIG. 17 is a schematic diagram of a structure of still another serial number indication apparatus according to an embodiment of this application;
FIG. 18 is a schematic diagram of a structure of a serial number indication apparatus according to an embodiment of this application;
FIG. 19 is a schematic diagram of a structure of another serial number indication apparatus according to an embodiment of this application;
FIG. 20 is a schematic diagram of a structure of still another serial number indication apparatus according to an embodiment of this application;
FIG. 21 is a schematic diagram of a structure of a serial number determining apparatus according to an embodiment of this application; and
FIG. 22 is a schematic diagram of a structure of another serial number determining apparatus according to an embodiment of this application.

### DESCRIPTION OF EMBODIMENTS

The following describes embodiments of this application with reference to the accompanying drawings in embodiments of this application.

Technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, or a new radio (new radio, NR) system. A 5G mobile communication system in embodiments of this application includes a non-standalone (non-standalone, NSA) 5G mobile communication system or a standalone (standalone, SA) 5G mobile communication system. The technical solutions provided in embodiments of this application may be further applied to a future communication system, for example, a 6th generation (6th generation, 6G) mobile communication system. The communication system in embodiments of this application may alternatively be a public land mobile communication network (public land mobile network, PLMN), a device-to-device (device-to-device, D2D) communication system, a machine-to-machine (machine-to-machine, M2M) communication system, an internet of things (internet of things, IoT) communication system, an internet of vehicles communication system, or another communication system.

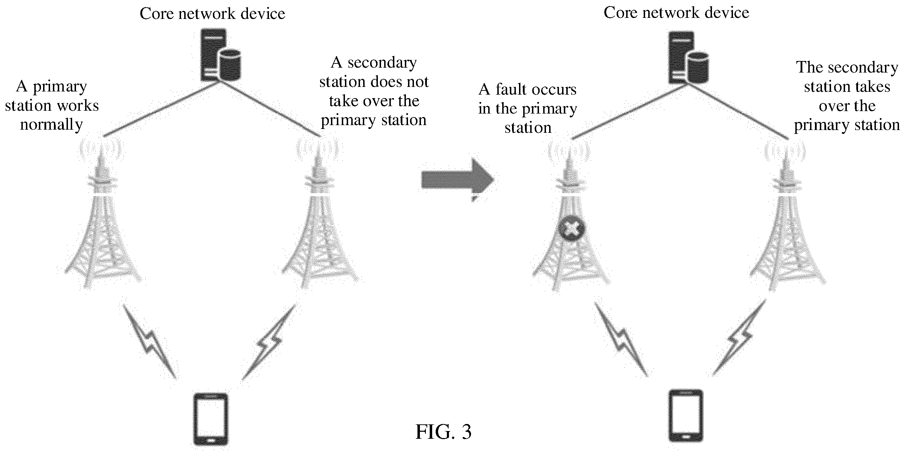

FIG. 3 is a schematic diagram of an architecture of a communication system according to an embodiment of this application. The communication system 1000 includes a first network apparatus 101, a second network apparatus 102, and a terminal apparatus 103. The first network apparatus 101, the second network apparatus 102, and the terminal apparatus 103 may communicate with each other, for example, by using a wireless network. When the second network apparatus 102 works normally, the first network apparatus 101 does not transmit data to the terminal apparatus. When the first network apparatus 101 detects that a fault occurs in the second network apparatus 102, the first network apparatus 101 is immediately enabled to take over the second network apparatus 102, to transmit data to the terminal apparatus.

The terminal apparatus 103 in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a future 5G network, a terminal in a future evolved PLMN, a terminal in a future internet of vehicles, or the like. This is not limited in embodiments of this application.

By way of example, and not limitation, in embodiments of this application, the terminal apparatus 103 may be a mobile phone, a tablet computer, a computer having a wireless transceiver function, a virtual reality terminal, an augmented reality terminal, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like.

By way of example, and not limitation, in embodiments of this application, the wearable device may alternatively be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on a body or integrated into clothes or an accessory of a user. The wearable device is not only a hardware device, but is used to implement powerful functions through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, and smart jewelry for monitoring physical signs.

In addition, the terminal apparatus 103 in embodiments of this application may alternatively be a terminal in an internet of things (internet of things, IoT) system. IoT is an important part of future development of information technologies. A main technical feature of the IoT is to connect an object to a network by using a communication technology, to implement an intelligent network for human-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the terminal apparatus 103 may alternatively include a sensor such as an intelligent printer, a train detector, or a gas station. Main functions of the terminal apparatus 103 include collecting data (for some terminals), receiving control information and downlink data from an access network device, sending an electromagnetic wave, and transmitting uplink data to the access network device.

Optionally, the first network apparatus 101/second network apparatus 102 in embodiments of this application may be any communication device that has a wireless transceiver function and that is configured to communicate with the terminal apparatus 103. The first network apparatus 101/second network apparatus 102 includes but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the first network apparatus 101/second network apparatus 102 may alternatively be a gNB, a TRP, or a TP in a 5G system, or one antenna panel or a group of antenna panels (including a plurality of antenna panels) of a base station in a 5G system. In addition, the first network apparatus 101/second network apparatus 102 may alternatively be a network node that forms a gNB or a TP, for example, a BBU or a distributed unit (distributed unit, DU). The first network apparatus 101/second network apparatus 102 may alternatively be a network device in a 5.5G or 6G system.

In some deployments, the gNB may include a central unit (central unit, CU) and the DU. In addition, the gNB may alternatively include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical layer (physical layer, PHY). The AAU implements some physical layer processing functions, radio frequency processing, and a function related to an active antenna. Information at the RRC layer eventually becomes information at the PHY layer, or is changed from information at the PHY layer. Therefore, in this architecture, higher-layer signaling such as RRC layer signaling may also be considered as being sent by the DU or sent by the DU and the AAU. It may be understood that the access network device may be a device including one or more of a CU node, a DU node, and an AAU node.

Optionally, in embodiments of this application, the first network apparatus 101/second network apparatus 102 and the terminal apparatus 103 may communicate with each other by using a licensed spectrum, or may communicate with each other by using an unlicensed spectrum, or may communicate with each other by using both a licensed spectrum and an unlicensed spectrum. The first network device 101 and the terminal apparatus 103 may communicate with each other by using a high spectrum (for example, 4.9 GHz), and the second network device 102 and the terminal apparatus 103 may communicate with each other by using a low spectrum (for example, 2.5 GHz).

Optionally, the first network device 101, the second network device 102, and the terminal apparatus 103 in embodiments of this application may be deployed on land, including an indoor or outdoor device, a handheld device, or a vehicle-mounted device; or may be deployed on a water surface; or may be deployed on an aircraft, a balloon, or an artificial satellite in the air. Application scenarios of the first network device 101, the second network device 102, and the terminal apparatus 103 are not limited in an embodiment of embodiments of this application.

Optionally, in embodiments of this application, the first network device 101, the second network device 102, and the terminal apparatus 103 include a hardware layer, an operating system layer running above the hardware layer, and an application layer running above the operating system layer. The hardware layer includes hardware such as a central processing unit (central processing unit, CPU), a memory management unit (memory management unit, MMU), or a memory (also referred to as a main memory). An operating system may be any one or more types of computer operating systems, for example, a Linux operating system, a Unix operating system, an Android operating system, an iOS operating system, or a Windows operating system, that implement service processing through a process (process). The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the first network device 101, the second network device 102, and the terminal apparatus 103, or a functional module that can invoke and execute a program in the first network device 101, the second network device 102, and the terminal apparatus 103.

In other words, related functions of the first network device 101, the second network device 102, and the terminal apparatus 103 in embodiments of this application may be implemented by one device, or may be jointly implemented by a plurality of devices, or may be implemented by at least one functional module in one device. This is not specifically limited in embodiments of this application. It may be understood that the foregoing function may be a network element in a hardware device, or a software function running on special-purpose hardware, or a combination of hardware and software, or a virtualization function instantiated on a platform (for example, a cloud platform).

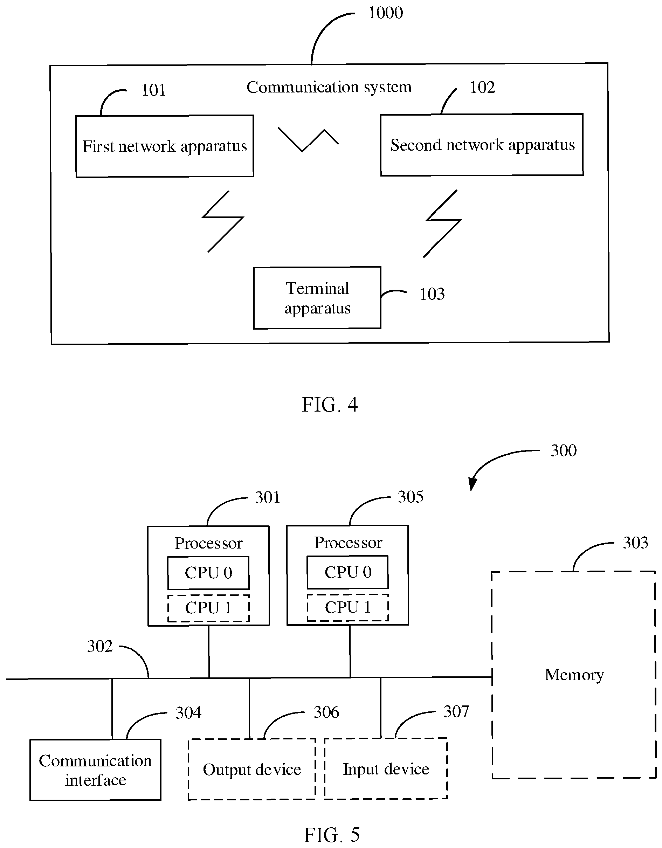

For example, related functions of the first network device 101, the second network device 102, and the terminal apparatus 103 in embodiments of this application may be implemented by a communication apparatus 300 in FIG. 4. FIG. 4 is a schematic diagram of a structure of the communication apparatus 300 according to an embodiment of this application. The communication apparatus 300 includes at least one processor 301, a communication line 302, and at least one communication interface (in FIG. 4, only an example in which a communication interface 304 and one processor 301 are included is used for description). Optionally, the communication apparatus 300 may further include a memory 303.

The processor 301 may be a central processing unit (central processing unit, CPU), a microprocessor, an application-specific integrated circuit (application-specific integrated circuit, ASIC), or at least one integrated circuit configured to control program execution of the solutions in embodiments of this application.

The communication line 302 may include a path used to connect different components.

The communication interface 304 may be a transceiver module, configured to communicate with another device or a communication network, for example, the ethernet, a RAN, or a wireless local area network (wireless local area network, WLAN). For example, the transceiver module may be an apparatus such as a transceiver. Optionally, the communication interface 304 may alternatively be a transceiver circuit located inside the processor 301, and is configured to implement signal input and signal output of the processor.

The memory 303 may be an apparatus having a storage function. For example, the memory 303 may be a read-only memory (read-only memory, ROM), another type of static storage device capable of storing static information and instructions, a random access memory (random access memory, RAM), or another type of dynamic storage device capable of storing information and instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium, another magnetic storage device, or any other medium capable of including or storing expected program code in a form of instructions or a data structure and capable of being accessed by a computer. However, the memory 303 is not limited thereto. The memory may exist independently, and is connected to the processor through the communication line 302. Alternatively, the memory may be integrated with the processor.

The memory 303 is configured to store computer-executable instructions for executing the solutions in embodiments of this application, and the processor 301 controls the execution. The processor 301 is configured to execute the computer-executable instructions stored in the memory 303, to implement a communication method provided in embodiments of this application.

Alternatively, the processor 301 may perform a processing-related function in the communication method provided in embodiments of this application, and the communication interface 304 is responsible for communicating with another device or a communication network. This is not specifically limited in embodiments of this application.

The computer-executable instructions in embodiments of this application may alternatively be referred to as application program code. This is not specifically limited in embodiments of this application.

During specific implementation, in an embodiment, the processor 301 may include at least one CPU, for example, a CPU 0 and a CPU 1 in FIG. 4.

During specific implementation, in an embodiment, the communication apparatus 300 may include a plurality of processors, for example, the processor 301 and a processor 303 in FIG. 4. Each of the processors may be a single-core (single-CPU) processor, or may be a multi-core (multi-CPU) processor. The processor herein may be at least one device, circuit, and/or a processing core configured to process data (such as computer program instructions).

During specific implementation, in an embodiment, the communication apparatus 300 may further include an output device 305 and an input device 303. The output device 305 communicates with the processor 301, and may display information in a plurality of manners.

The communication apparatus 300 may be a general-purpose apparatus or a dedicated apparatus. For example, the communication apparatus 300 may be a desktop computer, a portable computer, a network server, a palmtop computer (personal digital assistant, PDA), a mobile phone, a tablet computer, a wireless terminal, an embedded device, or a device having a structure similar to that in FIG. 4. A type of the communication apparatus 300 is not limited in embodiments of this application.

The following describes in detail a serial number indication method and determining method provided in embodiments of this application with reference to FIG. 1 to FIG. 12.

It should be noted that in embodiments of this application, names of messages between network elements, names of parameters in messages, or the like are merely examples, and there may be other names during specific implementation. This is not specifically limited in embodiments of this application.

In embodiments of this application, these names may be used separately, or may be used together.

Terms that may be used in embodiments of this application are first explained.

In wireless communication, when a service needs to be transmitted, a network apparatus configures a radio bearer for the terminal apparatus for service transmission. A configuration of the radio bearer includes PDCP configuration information. In addition, information about the configuration of the radio bearer is associated with RLC configuration information by using an identifier of the radio bearer, or may include RLC configuration information.

The RLC configuration information may be used to configure an RLC working mode, where the RLC working mode may be configured as any one of a transparent mode (transparent mode, TM), an unacknowledged mode (unacknowledged mode, UM), and an acknowledged mode (acknowledged mode, AM).

In the AM RLC mode, a receiving end determines, based on an SN in a header of a received RLC data PDU, which SDU (or SDU segment) is lost. In addition, when a condition for sending a status protocol data unit (status PDU) status report is met, the receiving end sends a status PDU to notify a transmitting end of an RLC SDU or segment that is successfully received and an RLC SDU or segment that is not successfully received. The transmitting end may retransmit the lost SDU or SDU segment based on content of the status report. This ensures reliability of data packet transmission. For an RLC SDU. if only some segments are lost, only the lost segments need to be retransmitted, and the entire SDU does not need to be retransmitted.

When the RLC is configured as a UM RLC, if an RLC SDU is not segmented when being sent, an SN does not need to be added to a header corresponding to an RLC PDU including the entire RLC SDU; or if an SDU is segmented when being sent, SNs need to be added to a header corresponding to an RLC PDU including the RLC SDU segments. A reason is as follows: For the PDU including the entire SDU, after receiving the PDU, an RLC layer of a receiving end may directly deliver the PDU to an upper layer without reading the SN. However, for the PDU including the SDU segments, a receiving end needs to determine, based on the SNs in the header, SDU segments that belong to a same entire SDU, to assemble the SDU segments.

Currently, to resolve a problem of device reliability, another solution for fast switching between a primary station and a secondary station is proposed. FIG. 5 is a schematic diagram of an architecture of fast switching between a primary station and a secondary station. When the primary station works normally, the secondary station does not transmit data to a terminal apparatus. When the secondary station detects that a fault occurs in the primary station, the secondary station is immediately enabled to transmit data to a terminal apparatus. However, when the fault occurs in the primary station, and the secondary station takes over the primary station to communicate with the terminal apparatus, the secondary station may not know a status of receiving an RLC data packet by the terminal apparatus, that is, the secondary station does not know which RLC data packet is received by the terminal apparatus from the primary station. Consequently, a serial number of an RLC data packet sent by the secondary station cannot be aligned with a serial number of an RLC data packet in the terminal apparatus. As a result, a receiving error of the terminal apparatus may be caused, and communication reliability is reduced.

However, when device reliability is improved, a large quantity of data packets are lost because a serial number in the secondary station cannot be determined during fast switching between the primary station and the secondary station.

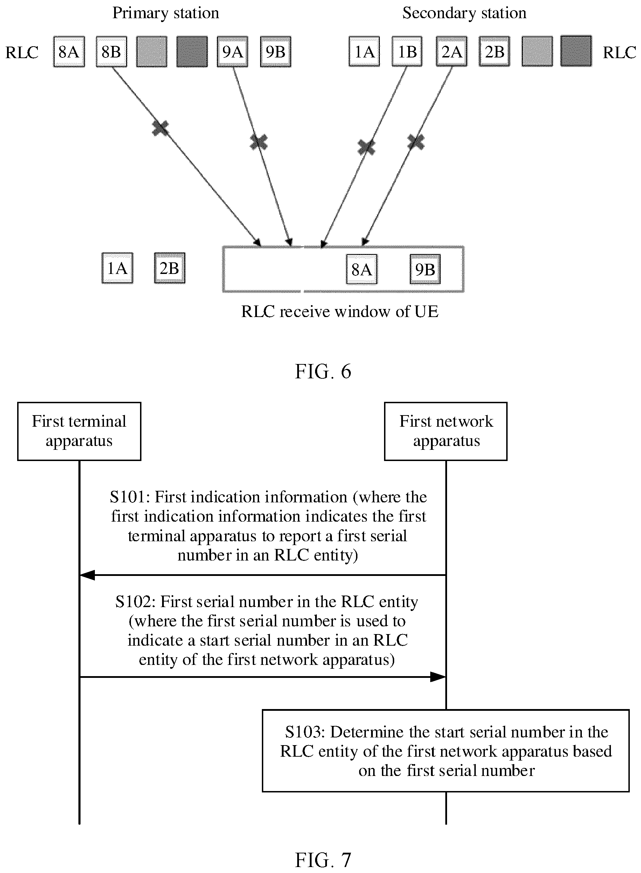

As shown in FIG. 6, in a UM RLC mode, because a secondary station cannot accurately determine a start serial number in an RLC entity of the secondary station after takeover, an RLC SN in a terminal apparatus is not aligned with an RLC SN in the secondary station when the terminal apparatus receives an RLC data packet, resulting in a receiving error. In the UM mode, SNs are carried in a header only when an RLC PDU includes SDU segments; or no SN is carried when an RLC PDU does not include SDU segments. Descriptions are provided below by using an example. As shown in FIG. 6, in a primary station, a packet 8 is divided into a segment A and a segment B, and SNs carried in RLC PDU headers corresponding to the two segments are both 8. In addition, the PDU header further includes indication information that indicates a specific segment, namely, "8A" or "8B". A packet 9 is divided into a segment A and a segment B, and SNs carried in RLC PDU headers corresponding to the two segments are both 9. In addition, the PDU header further includes indication information that indicates a specific segment, namely, "9A" or "9B". Other RLC SDUs are not segmented, so that corresponding RLC PDU headers do not include SNs. It is assumed that before a fault occurs in the primary station, SNs allocated to the RLC segments are ranked from an initial value to 9 in sequence, and the segment B of the packet 8 and the segment A of the packet 9 are lost during transmission. In this case, the segment A of the packet 8 and the segment B of the packet 9 that are to be reassembled are stored in an RLC buffer window maintained on a UE side. If the fault occurs in the primary station, the secondary station starts to communicate with the UE. Because the secondary station does not know setting of the RLC SNs in the primary station, when the secondary station transmits the SDU segments, the setting may start from the initial SN (for example, SN=0 or SN=1). It is assumed that a segment B of a packet 1 and a segment A of a packet 2 are lost when the secondary station performs transmission. However, because the size of an RLC receive window of the UE is fixed, the segment A of the packet 1 and the segment B of the packet 2 may be discarded by the UE when the segments fall outside the window, resulting in a packet loss. In addition, the UE has received the segments (namely, 8A and 9B) of the packets 8 and 9 sent by the primary station, and 8A and 9B received from the primary station are waiting to be reassembled in the RLC buffer window of the UE. If the secondary station starts the setting from the initial SN, when an SN of an RLC SDU segment is numbered 8, the UE combines the SDU segment 8 received from the secondary station with an SDU segment 8 received from the primary station. However, actually, because the secondary station re-sets SNs, the segment 8 sent by the secondary station and the segment 8 sent by the primary station are not segments of a same SDU. Consequently, the UE may incorrectly combine the segments of the different SDUs, resulting in a transmission error.

Based on this, as shown in FIG. 7, an embodiment of this application provides a serial number indication method. The method may include the following steps.

S101: A first network apparatus sends first indication information to a first terminal apparatus, where the first indication information indicates the first terminal apparatus to report a first serial number in an RLC entity. Correspondingly, the first terminal apparatus receives the first indication information.

The first network apparatus 101 may be the foregoing secondary station, or may be the foregoing primary station.

Before communicating with the first network apparatus, the first terminal apparatus may receive and buffer an RLC PDU sent by a second network apparatus, where the RLC PDU may include an RLC SDU segment, and an RLC PDU header corresponding to the RLC SDU segment includes an SN. Therefore, when the first network apparatus establishes communication with the first terminal apparatus (for example, when the first network apparatus starts to send a data packet to the first terminal apparatus), or in a communication process (for example, in a process in which the first network apparatus sends a data packet to the first terminal apparatus), the first network apparatus may send the first indication information to the first terminal apparatus, where the first indication information indicates the first terminal apparatus to report the first serial number in the RLC entity of the first terminal apparatus. The first indication information may be radio resource control (radio resource control, RRC) signaling, a media access control-control element (media access control-control element, MAC-CE), downlink control information (downlink control information, DCI), or the like.

For example, when the first network apparatus detects that a fault occurs in the second network apparatus, the first network apparatus may send the first indication information to the first terminal apparatus. In this case, before step S101, the first network apparatus detects that the fault occurs in the second network apparatus, where the second network apparatus is a network apparatus that communicates with the first terminal apparatus before the fault occurs. The first network apparatus may be the secondary station shown in FIG. 6, and the second network apparatus may be the primary station shown in FIG. 6.

S102: The first terminal apparatus sends the first serial number in the RLC entity to the first network apparatus based on the first indication information, where the first serial number is used to indicate a start serial number in an RLC entity of the first network apparatus. Correspondingly, the first network apparatus receives the first serial number in the RLC entity.

After receiving the first indication information, the first terminal apparatus sends the first serial number in the RLC entity of the first terminal apparatus to the network device based on the indication information. The RLC entity may be understood as an entity that performs processing such as segmentation and header addition on a PDU received from an upper layer (a PDCP layer). It should be noted that a plurality of RLC entities may be established in the first terminal apparatus. In this case, the first terminal apparatus may report a first serial number in one or more RLC entities or report first serial numbers in all the RLC entities based on the first indication information of the network device. This is not limited herein. Specifically, the indication information sent by the network device may further indicate an RLC entity in which a first serial number is reported by the first terminal apparatus.

Optionally, the first serial number is a serial number in the RLC entity of the first terminal apparatus. In other words, the first serial number is a serial number of one or more RLC SDU segments received or buffered by the first terminal apparatus. Because the first terminal apparatus receives the one or more RLC SDU segments from the second network apparatus, and an RLC serial number in the first terminal apparatus is aligned with an RLC serial number of the second network apparatus, the first serial number may also be a serial number of an RLC entity of the second network apparatus.

Further, the first serial number is a largest value in serial numbers in the RLC entity of the first terminal apparatus. In other words, the first serial number is a largest value in serial numbers of the one or more RLC SDU segments received or buffered by the first terminal apparatus. As shown in FIG. 6, the UE buffers segments 8A and 9B sent by the primary station. In this case, the largest value in the serial numbers in the RLC entity of the UE is 9. Alternatively, the first serial number may be an SN value corresponding to an upper boundary of an RLC receive window of the UE.

S103: The first network apparatus determines the start serial number in the RLC entity of the first network apparatus based on the first serial number.

The first network apparatus receives the first serial number in the RLC entity sent by the first terminal apparatus, and determines the start serial number in the RLC entity of the first network apparatus based on the first serial number, so that a serial number in the RLC entity of the first network apparatus is aligned with a serial number in the RLC entity of the first terminal apparatus. Specifically, for example, the first serial number is the largest value in the serial numbers in the RLC entity of the first terminal apparatus. In this case, the first network apparatus determines that the start serial number in the RLC entity of the first network apparatus may be the largest value, or may be a next serial number of the largest serial number, or may be a serial number associated with the largest serial number. As shown in FIG. 6, the largest value, in the serial numbers in the RLC entity of the UE, obtained by the secondary station is 9. In this case, the secondary station determines that a start serial number of a next SDU segment in the RLC entity of the secondary station may be 9 or 10. Therefore, after receiving the segment 10 sent by the secondary station, the UE does not incorrectly combine the segment 10 with 8A and 9B that are previously received from the primary station. This improves communication reliability. In addition, the UE sequentially buffers RLC SDUs based on the serial numbers, so that a packet loss caused when a segment received by the secondary station falls outside the RLC receive window does not occur.

According to the serial number indication method provided in this embodiment of this application, the first terminal apparatus reports the first serial number in the RLC entity based on the indication of the first network apparatus, and the first network apparatus may determine the start serial number in the RLC entity of the first network apparatus based on the first serial number. In this way, a serial number in the RLC entity of the first network apparatus is aligned with a serial number in the RLC entity of the first terminal apparatus, so that the first terminal apparatus can perform accurate combination based on the aligned serial numbers when receiving the data packet sent by the first network apparatus. This improves communication reliability.

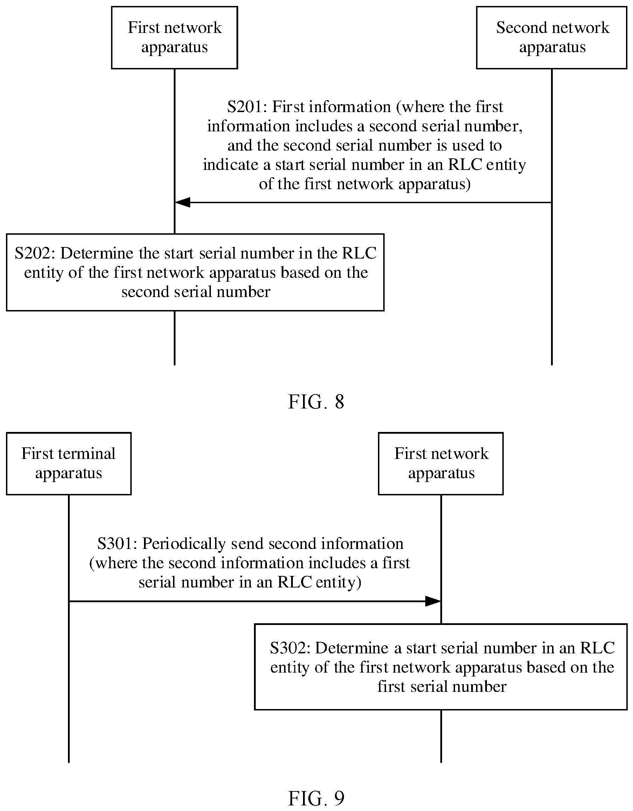

As shown in FIG. 8, an embodiment of this application provides another serial number indication method. The method may include the following steps.

S201: A second network apparatus sends first information to a first network apparatus, where the first information includes a second serial number, and the second serial number is used to indicate a start serial number in an RLC entity of the first network apparatus. Correspondingly, the first network apparatus receives the first information from the second network apparatus.

The second network apparatus may always keep communication with the first network apparatus. Before a fault occurs in the second network apparatus, the second network apparatus may send the first information to the first network apparatus, where the first information includes the second serial number. The first information may be context information of a first terminal apparatus exchanged between the second network apparatus and the first network apparatus. The second network apparatus and the first network apparatus may communicate with each other in a manner similar to a "heartbeat mechanism". For example, the second network apparatus periodically exchanges information with the first network apparatus, or periodically sends the first information to the first network apparatus, so that communication statuses of the two network apparatuses are synchronous with each other. The communication status includes at least a data sending state, a data receiving state, a signaling configuration state, a UE context, a base station context, and the like.

Before the fault occurs in the second network apparatus, the second network apparatus segments an RLC SDU that is to be sent to the first terminal apparatus and that needs to be segmented, and allocates a corresponding serial number to an RLC SDU segment. Therefore, the second serial number is a serial number in an RLC entity of the second network apparatus.

Specifically, the RLC entity of the second network apparatus includes a serial number corresponding to one or more RLC SDU segments, and the second serial number may be a largest value in serial numbers in the RLC entity of the second network apparatus. Before the fault occurs in the second network apparatus, if a transmission process is normal and no data packet is lost, the largest value in the serial numbers in the RLC entity of the second network apparatus is the same as a largest value in serial numbers in an RLC entity of the first terminal apparatus. When an RLC layer of the second network apparatus receives a new RLC SDU from an upper layer, if the SDU needs to be segmented, the RLC entity of the second network apparatus needs to continue to allocate new serial numbers to the SDU segments, that is, the largest serial number in the RLC entity is updated. Therefore, in an optional implementation, step S201 may be: sending the first information to the first network apparatus when the largest serial number in the RLC entity of the second network apparatus is updated. In other words, when the largest serial number in the RLC entity of the second network apparatus is updated, the second network apparatus is triggered to send the first information to the first network apparatus. The second network apparatus sends the latest largest value in the serial numbers in the RLC entity to the first network apparatus, so that the first network apparatus can obtain the largest value in the serial numbers in the RLC entity of the second network apparatus in a timely manner.

S202: The first network apparatus determines the start serial number in the RLC entity of the first network apparatus based on the second serial number.

Because the first network apparatus obtains the second serial number in a timely manner, when the fault occurs in the second network apparatus, and the first network apparatus takes over the second network apparatus, the first network apparatus may determine the start serial number in the RLC entity of the first network apparatus based on the second serial number. In an implementation, after obtaining the largest value in the serial numbers in the RLC entity of the second network apparatus in a timely manner, the first network apparatus may determine the start serial number in the RLC entity of the first network apparatus based on the largest value in the serial numbers in the RLC entity, where the start serial number may be a next serial number of the largest value in the serial numbers in the RLC entity of the second network apparatus. As shown in FIG. 6, the largest value, in the serial numbers in the RLC entity of the primary station, obtained by the secondary station is 9. In this case, the secondary station determines that a start serial number of a next SDU segment in the RLC entity of the secondary station is 10. Therefore, after receiving the segment 10 sent by the secondary station, the UE does not incorrectly combine the segment 10 with the segments 8 and 9 that are previously received from the primary station. This improves communication reliability. In addition, the UE sequentially buffers RLC SDUs based on the serial numbers, so that a packet loss caused when a segment received by the secondary station falls outside an RLC receive window does not occur.

According to the serial number indication method provided in this embodiment of this application, when the fault does not occur in the second network apparatus, the second network apparatus sends the second serial number to the first network apparatus, and the first network apparatus determines the start serial number in the RLC entity of the first network apparatus based on the second serial number. In this way, when the fault occurs in the second network apparatus, and the first network apparatus takes over the second network apparatus, a serial number in the RLC entity of the first network apparatus can be aligned with a serial number in the RLC entity of the first terminal apparatus, so that the first terminal apparatus can perform accurate combination based on the aligned serial numbers when receiving the data packet sent by the first network apparatus. This improves communication reliability.

As shown in FIG. 9, an embodiment of this application provides still another serial number indication method. The method may include the following steps.

S301: A first terminal apparatus periodically sends second information to a first network apparatus or a second network apparatus, where the second information includes a first serial number in an RLC entity, and the first serial number is used to indicate a start serial number in an RLC entity of the first network apparatus or the second network apparatus. Correspondingly, the first network apparatus or the second network apparatus receives the second information periodically sent by the first terminal apparatus. Specifically, before a fault occurs in a second network, both the first network apparatus and the second network apparatus may receive the second information sent by the first terminal apparatus. After the fault occurs in the second network, only the first network apparatus can receive the second information sent by the first terminal apparatus.

Before communicating with the first network apparatus, the first terminal apparatus may receive and buffer an RLC PDU sent by the second network apparatus, where the RLC PDU may include an RLC SDU segment, and a header of the RLC PDU that includes the RLC SDU segment includes an SN. The first terminal apparatus may periodically send the second information to the first network apparatus, where the second information includes the first serial number in the RLC entity. Specifically, the first terminal apparatus may periodically send the second information to the first network apparatus before or after the first network apparatus takes over the second network apparatus, so that the first network apparatus can obtain the first serial number in the RLC entity in a timely manner.

Specifically, in an implementation, the first terminal apparatus starts a timer. After the timer expires, the first terminal apparatus sends the second information to the first network apparatus, and restarts the timer. The timer is set, and the second information is periodically sent to the first network apparatus based on timing duration, so that the first network apparatus can obtain the first serial number in the RLC entity in a timely manner. In a manner, the timing duration of the timer may be set based on an experimental or empirical value. In another implementation, the timer may be configured by the network apparatus for the terminal apparatus.

Optionally, the first serial number is a serial number in the RLC entity of the first terminal apparatus. In other words, the first serial number is a serial number of one or more RLC SDU segments received or buffered by the first terminal apparatus. Because the first terminal apparatus receives the one or more RLC SDU segments from the second network apparatus, the first serial number may also be a serial number of the RLC entity of the second network apparatus.

Further, the first serial number may be a largest value in serial numbers in the RLC entity of the first terminal apparatus. In other words, the first serial number is a largest value in serial numbers of the one or more RLC SDU segments received or buffered by the first terminal apparatus. The first serial number may include a plurality of serial numbers in different RLC entities. As shown in FIG. 6, the UE buffers segments 8A and 9B sent by the primary station. In this case, the largest value in the serial numbers in the RLC entity of the UE is 9. In other words, the first serial number may be an SN value corresponding to an upper boundary of an RLC receive window of the UE.

S302: The first network apparatus determines the start serial number in the RLC entity of the first network apparatus based on the first serial number.

The first network apparatus receives the first serial number in at least one RLC entity sent by the first terminal apparatus, and determines the start serial number in the RLC entity corresponding to the first network apparatus based on the first serial number, so that a serial number in the RLC entity of the first network apparatus is aligned with a serial number in the RLC entity of the first terminal apparatus. Specifically, for example, the first serial number is the largest value in the serial numbers in the RLC entity of the first terminal apparatus. In this case, the first network apparatus determines that the start serial number in the RLC entity of the first network apparatus may be the largest value, or may be a next serial number of the largest serial number. As shown in FIG. 6, the largest value, in the serial numbers in the RLC entity of the UE, obtained by the secondary station is 9. In this case, the secondary station determines that a start serial number of a next SDU segment in the RLC entity of the secondary station is 10. Therefore, after receiving the segment 10A sent by the secondary station, the UE does not incorrectly combine the segment 10A with the segments 8A and 9B that are previously received from the primary station. This improves communication reliability. In addition, the UE sequentially buffers RLC SDUs based on the serial numbers, so that a packet loss caused when a segment received by the secondary station falls outside the RLC receive window does not occur.

According to the serial number indication method provided in this embodiment of this application, the first terminal apparatus periodically sends the first serial number in the RLC entity to the first network apparatus, and the first network apparatus may determine the start serial number in the RLC entity of the first network apparatus based on the first serial number. In this way, a serial number in the RLC entity of the first network apparatus is aligned with a serial number in the RLC entity of the first terminal apparatus, so that the first terminal apparatus does not incorrectly combine segments of different RLC SDUs when receiving the data packet sent by the first network apparatus. This improves communication reliability.

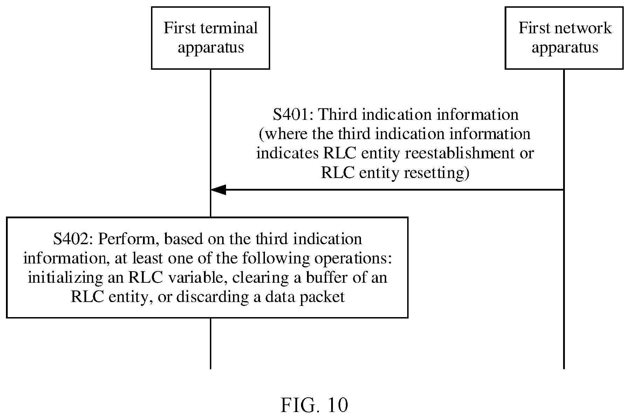

As shown in FIG. 10, an embodiment of this application provides still another serial number indication method. The method may include the following steps.

S401: A first network apparatus sends third indication information to a first terminal apparatus, where the third indication information indicates RLC entity reestablishment or RLC entity resetting. Correspondingly, the first terminal apparatus receives the third indication information from the first network apparatus.

The first network apparatus detects that a fault occurs in a second network apparatus, where the second network apparatus is a network apparatus that communicates with the first terminal apparatus before the fault occurs. Before communicating with the first network apparatus, the first terminal apparatus may receive and buffer an RLC PDU sent by the second network apparatus, where the RLC PDU may include an RLC SDU segment, and an RLC PDU header corresponding to the RLC SDU segment includes an SN. However, the first network apparatus does not know serial numbers in an RLC entity of the first terminal apparatus. Consequently, the first network apparatus does not know a start serial number from which serial numbers of a to-be-transmitted SDU segment in the RLC entity are set. In this way, the first network apparatus may send the third indication information to the first terminal apparatus, where the third indication information indicates RLC entity reestablishment or RLC entity resetting. The indicating RLC entity reestablishment or RLC entity resetting is indicating the first terminal apparatus to perform at least one of the following processing on the RLC entity: initializing a variable in the RLC entity, initializing a timer in the RLC entity, clearing a buffer of the RLC entity, or discarding a received data packet.

The third indication information is any one of the following: RRC signaling, a PDCP control PDU (PDCP control PDU), an RLC control PDU (RLC control PDU), a MAC CE, or downlink control information (downlink control information, DCI). The PDCP control PDU means that the PDCP PDU is used to transmit control information. The RLC control PDU means that the RLC PDU is used to transmit control information.

S402: The first terminal apparatus performs, based on the third indication information, at least one of the following operations: initializing the RLC variable, initializing the RLC timer, clearing the buffer of the RLC entity, or discarding the data packet.

The first terminal apparatus receives the third indication information, and performs, based on the third indication information, at least one of the following operations: initializing the RLC variable, clearing the buffer of the RLC entity, initializing the RLC timer, or discarding the data packet. The RLC variable includes an SN, a transmit window parameter, a receive window parameter, and the like. The initializing the RLC variable is restoring the RLC variable to an initial state in an RRC configuration or setting the RLC variable to zero. The initializing the RLC timer is resetting the timer, and starting timing from 0 or starting timing from a preset initial state. In this way, serial numbers of RLC entities of the first terminal apparatus and the first network apparatus both start from an initial value, and previously buffered SDU segments are cleared. Therefore, incorrect combination does not occur.

According to the serial number indication method provided in this embodiment of this application, the first terminal apparatus initializes the RLC variable, initializes the RLC timer, clears the buffer of the RLC entity, or discards the data packet based on the indication information of the first network apparatus. In this way, a serial number in the RLC entity of the first terminal apparatus is aligned with a serial number in the RLC entity of the first network apparatus, so that the first terminal apparatus can perform accurate combination based on the aligned serial numbers when receiving the data packet sent by the first network apparatus. This improves communication reliability.

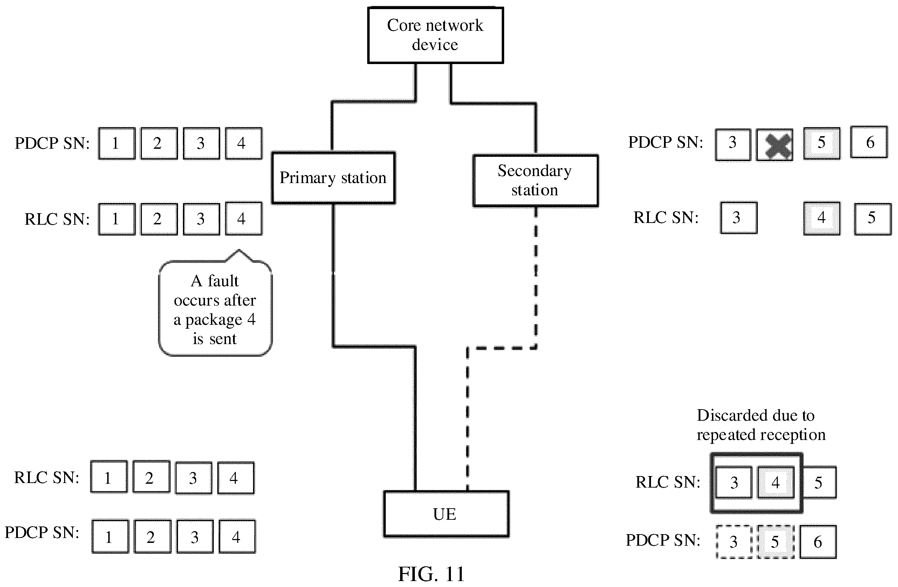

Each protocol layer (for example, a PDCP layer or an RLC layer) adds an SN to a header of a corresponding data packet, so that a receiving end processes the data packet based on the SN in the header. Currently, SNs of different protocol layers are set independently, and are not associated. As a result, after a fault occurs in the primary station, and the secondary station takes over the primary station, a packet loss caused when the RLC layer of the UE has different understandings of the data packet occurs. FIG. 11 is a schematic diagram of a scenario in which a receiving error occurs in a terminal apparatus in AM RLC because a serial number in an RLC entity and a serial number in a PDCP entity are separately set after takeover of a secondary station. It is assumed that, before the fault occurs in the primary station, the primary station has sent data packets whose PDCP SNs are 1 to 4, and corresponding RLC SNs are also 1 to 4. To be specific, because numbers start from 1 at both the PDCP layer and the RLC layer, after the data packet whose PDCP SN is 1 is transmitted to the RLC layer for processing, an RLC SN of the data packet is also 1. If the fault occurs in the primary station after the packet 4 is sent, the secondary station takes over the work of the primary station. It is assumed that the secondary station starts sending from a data packet whose PDCP SN is 3, and a corresponding RLC SN of the data packet is also 3. If a data packet whose PDCP SN is 4 is lost (for example, a core network device loses the data packet whose PDCP SN is 4 when transmitting the data packet to the secondary station), the secondary station sends a data packet whose PDCP SN is 5 after sending the data packet whose PDCP SN is 3. However, because the RLC layer is independent of a PDCP number, for the data packet whose PDCP SN is 5, the RLC layer sets an RLC SN of the data packet to 4. In this case, because the RLC layer on the UE side has received a data packet whose RLC SN is 4 sent by the primary station, the RLC layer considers that the data packet whose RLC SN is 4 received from the secondary station is a repeated data packet, and discards the data packet. However, the data packet whose RLC SN is 4 received from the secondary station is actually different from the data packet whose RLC SN is 4 received from the primary station, and should not be discarded.

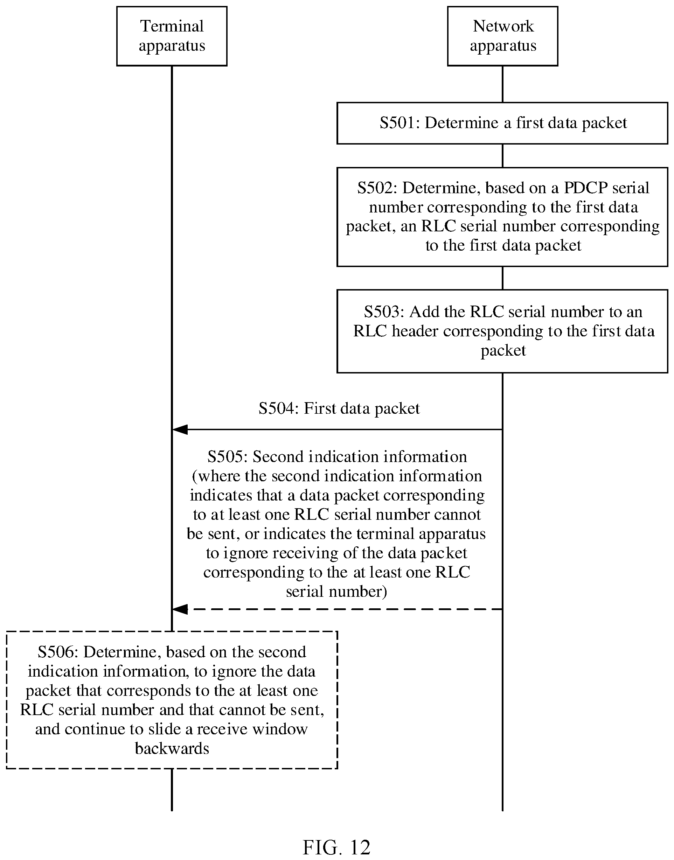

Based on this, as shown in FIG. 12, an embodiment of this application provides a serial number determining method. The method may include the following steps.

S501: A network apparatus determines a first data packet.

The network apparatus may be the secondary station shown in FIG. 11. The network apparatus determines the first data packet, where the first data packet may be any data packet to be sent to a terminal apparatus. The first data packet is specifically an SDU segment of a PDCP PDU or an SDU segment of an RLC PDU.

S502: The network apparatus determines, based on a PDCP serial number corresponding to the first data packet, an RLC serial number corresponding to the first data packet.

Both a PDCP layer and an RLC layer need to add an SN to a header corresponding to the first data packet (namely, the segment). The PDCP PDU is transmitted to the RLC layer. In this embodiment, the network apparatus may determine, based on the PDCP serial number corresponding to the first data packet, the RLC serial number corresponding to the first data packet.

Specifically, in an implementation, the RLC serial number may be equal to the PDCP serial number. To be specific, assuming that the PDCP layer sets the serial number of the first data packet to X, the RLC layer also sets the serial number of the first data packet to the serial number X.

In another implementation, an offset value between the RLC serial number and the PDCP serial number may be N, where N is a positive integer or a negative integer. In other words, the RLC serial number may be greater than the PDCP serial number, or the RLC serial number may be less than the PDCP serial number. To be specific, assuming that the PDCP layer marks the first data packet as a serial number X, the RLC layer marks the first data packet as a serial number X+N. N may be 0, 1, 2, or the like. The offset value N may be specified in a protocol or configured on a network side.

S503: The network apparatus adds the RLC serial number to an RLC header corresponding to the first data packet.

The network apparatus adds a serial number of each RLC SDU to a header of a corresponding RLC PDU, so that the terminal apparatus may perform processing such as reassembly and feedback retransmission based on the serial number of the RLC SDU after receiving the RLC PDU.

S504: The network apparatus sends the first data packet. Correspondingly, the terminal apparatus receives the first data packet from the network apparatus.

An actual processing process in which the network apparatus sends the first data packet is as follows: The first data packet is delivered from an RLC layer of the network apparatus to a MAC layer of the network apparatus, and then delivered from the MAC layer of the network apparatus to a physical layer of the network apparatus. After being processed by the physical layer, the first data packet is sent to the terminal apparatus over an air interface. Then, after the terminal apparatus receives the data packet, the data packet is delivered to a physical layer, delivered from the physical layer of the terminal apparatus to a MAC layer of the terminal apparatus, and delivered from the MAC layer of the terminal apparatus to an RLC layer of the terminal apparatus.

After the terminal apparatus receives the first data packet, because it can be ensured at an upper layer that PDCP SNs of same first data packets are the same when a primary station and a secondary station transmit the data packets to the UE, with reference to the solution in this embodiment, it can be further ensured that RLC SNs of the same first data packets are the same when the primary station and the secondary station transmit the same first data packets. In this way, when a data packet is lost at a PDCP layer of the secondary station, an RLC layer skips an SN correspondingly during SN setting. To be specific, if a data packet whose PDCP SN is 4 is lost, the secondary station sends a data packet whose PDCP SN is 5 after sending a data packet whose PDCP SN is 3. For the data packet whose PDCP SN is 5, the RLC layer also sets an RLC SN of the data packet to 5. Therefore, after receiving the first data packet, the UE does not incorrectly discard the first data packet as a repeatedly received data packet, but delivers the first data packet to a PDCP layer for processing.

Further, the method may further include the following steps (represented by dashed lines in the figure).

S505: The network apparatus sends second indication information to the terminal apparatus, where the second indication information indicates that a data packet corresponding to at least one RLC serial number cannot be sent, or indicates the terminal apparatus to ignore receiving of the data packet. Correspondingly, the terminal apparatus receives the second indication information from the network apparatus.

After a packet loss occurs at an upper layer of the RLC layer, the RLC layer of the network apparatus skips a serial number when setting a serial number of an RLC entity. In this case, in an AM RLC mode, the terminal apparatus detects that a data packet corresponding to a serial number is lost. In this case, the terminal apparatus sends a feedback message to the network apparatus to request retransmission. In addition, if the lost data packet is not received, the terminal apparatus cannot continue to receive a subsequent data packet. The network apparatus knows that the data packet corresponding to the serial number is lost and cannot be sent successfully, so that the network apparatus sends the second indication information to the terminal apparatus, to indicate that the data packet corresponding to the at least one RLC serial number cannot be sent. That the data packet cannot be sent means that the network apparatus cannot send the data packet to the terminal apparatus, and the terminal apparatus does not receive the data packet. Therefore, even if the terminal apparatus detects that the data packet corresponding to the at least one RLC serial number are not successfully received, the terminal apparatus does not need to continue to wait for the data packet, but continues to receive another data packet.

The second indication information is included in an RLC control PDU (RLC control PDU), or the second indication information is included in an RLC data PDU (RLC data PDU). The RLC control PDU carries first indication information, and the first indication information indicates a function of the PDU. Further, the RLC control PDU may further carry the at least one RLC serial number. In addition, the RLC data PDU may not include a payload or an RLC SDU (payload), but includes only a header.

S506: The first terminal apparatus determines, based on the second indication information, to ignore the data packet that corresponds to the at least one RLC serial number and that cannot be sent, and continues to slide a receive window backwards (continues to receive another data packet).

The terminal apparatus ignores, based on the second indication information, a receiving hole caused by the loss of the data packet corresponding to the at least one RLC serial number, so that the receive window can be moved backward to continue to receive the subsequent data packet. This improves communication efficiency. Specifically, after receiving the second indication information, the terminal apparatus updates an RX_next parameter to an SN corresponding to a next RLC SDU that is not completely received. The RX_next parameter herein refers to a next SN of an SN corresponding to the last RLC SDU in a plurality of RLC SDUs that are consecutively received in a correct order, or may be a lower boundary of the receive window.

According to the serial number determining method provided in this embodiment of this application, the network apparatus determines, based on the PDCP serial number corresponding to the first data packet, the RLC serial number corresponding to the first data packet. In this way, the RLC layer and the PDCP layer of the network apparatus process serial numbers in a consistent manner. When a fault occurs in the network apparatus, a case in which the RLC layer of the terminal apparatus receives a first data packet corresponding to a repeated serial number, and discards the first data packet does not occur. This improves communication reliability.

The solution of the embodiment shown in FIG. 10 may also be used for the problem in FIG. 11. To be specific, the network apparatus sends indication information to the terminal apparatus, to indicate the terminal apparatus to perform RLC entity reestablishment or RLC entity resetting. For details, refer to the embodiment in FIG. 10. Details are not described herein again.

It may be understood that, in the foregoing embodiments, the methods and/or the steps implemented by the terminal apparatus may also be implemented by a component (for example, a chip or a circuit) that can be used in the terminal apparatus; the method and/or the steps implemented by the first network apparatus may also be implemented by a component (for example, a chip or a circuit) that can be used in the first network apparatus; and the method and/or the steps implemented by the second network apparatus may also be implemented by a component (for example, a chip or a circuit) that can be used in the second network apparatus.

The foregoing mainly describes the solutions provided in embodiments of this application from a perspective of interaction between network elements. Correspondingly, an embodiment of this application further provides a serial number indication/determining apparatus, and the serial number indication/determining apparatus is configured to implement the foregoing methods. The serial number indication/determining apparatus may be the terminal device in the foregoing method embodiments, an apparatus including the terminal device, or a component that can be used in the terminal device. Alternatively, the serial number indication/determining apparatus may be the first network device in the foregoing method embodiments, an apparatus including the first network device, or a component that can be used in the first network device. It may be understood that, to implement the foregoing functions, the serial number indication/determining apparatus includes a corresponding hardware structure and/or software module for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of the invention.

In embodiments of this application, the serial number indication/determining apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used.

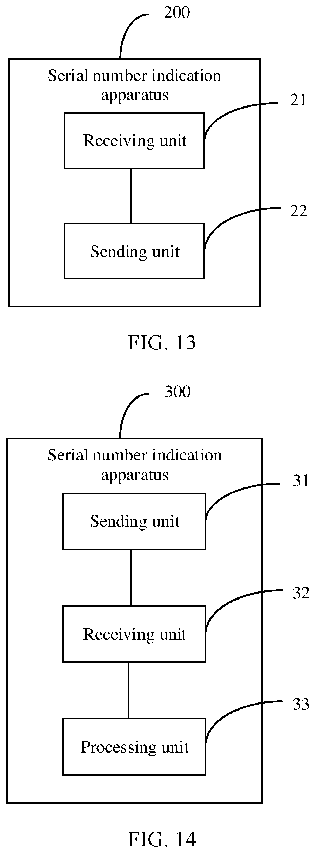

Based on a same concept as the foregoing serial number indication method, FIG. 13 further provides a schematic diagram of a structure of a serial number indication apparatus. The apparatus 200 includes a receiving unit 21 and a sending unit 22.

The receiving unit 21 is configured to receive first indication information from a first network apparatus, where the first indication information indicates the first terminal apparatus to report a first serial number in a radio link control RLC entity.

The sending unit 22 is configured to send the first serial number in the RLC entity to the first network apparatus based on the first indication information, where the first serial number is used to indicate a start serial number in an RLC entity of the first network apparatus.

The receiving unit 21 and the sending unit 22 may be disposed separately, or may be combined into a transceiver unit. For example, the apparatus 200 may be an apparatus, a chip used in the apparatus, or another combined device or component that has a function of the apparatus. When the apparatus 200 is the apparatus, the transceiver unit may be a transceiver, and the transceiver may include an antenna, a radio frequency circuit, and the like. The apparatus may further include a processing unit. The processing unit may be a processor (or a processing circuit), for example, a baseband processor. The baseband processor may include one or more central processing units (central processing units, CPUs). When the apparatus 200 is the component that has the function of the apparatus, the transceiver unit may be a radio frequency unit, and the processing unit may be a processor (or a processing circuit), for example, a baseband processor. When the apparatus 200 is a chip system, the transceiver unit may be an input/output interface of a chip (for example, a baseband chip), and the processing unit may be a processor (or a processing circuit) of the chip system, and may include one or more central processing units. It should be understood that, in this embodiment of this application, the processing unit may be implemented by a processor or a processor-related circuit component (or a processing circuit), and the transceiver unit may be implemented by a transceiver or a transceiver-related circuit component. A receiving unit and a sending unit described below are similar to the receiving unit 21 and the sending unit 22.

For specific implementations of the receiving unit 21 and the sending unit 22, refer to related descriptions of the first terminal apparatus in the serial number indication method shown in FIG. 7.

According to the serial number indication apparatus provided in this embodiment of this application, the apparatus reports the first serial number in the RLC entity based on the indication of the first network apparatus, and the first network apparatus may determine the start serial number in the RLC entity of the first network apparatus based on the first serial number. In this way, a serial number in the RLC entity of the first network apparatus is aligned with a serial number in the RLC entity of the apparatus, so that the apparatus can perform accurate combination based on the aligned serial numbers when receiving a data packet sent by the first network apparatus. This improves communication reliability.

Based on a same concept as the foregoing serial number indication method, FIG. 14 further provides a schematic diagram of a structure of a serial number indication apparatus. The apparatus 300 includes a sending unit 31, a receiving unit 32, and a processing unit 33.

The sending unit 31 is configured to send first indication information to a first terminal apparatus, where the first indication information indicates the first terminal apparatus to report a first serial number in a radio link control RLC entity.

The receiving unit 32 is configured to receive the first serial number in the RLC entity from the first terminal apparatus.

The processing unit 33 is configured to determine a start serial number in an RLC entity of the first network apparatus based on the first serial number.

For specific implementations of the sending unit 31, the receiving unit 32, and the processing unit 33, refer to related descriptions of the first network apparatus in the serial number indication method shown in FIG. 7.

According to the serial number indication apparatus provided in this embodiment of this application, the first terminal apparatus reports the first serial number in the RLC entity based on the indication of the apparatus, and the apparatus may determine the start serial number in the RLC entity of the first network apparatus based on the first serial number. In this way, a serial number in the RLC entity of the apparatus is aligned with a serial number in the RLC entity of the first terminal apparatus, so that the first terminal apparatus can perform accurate combination based on the aligned serial numbers when receiving a data packet sent by the apparatus. This improves communication reliability.

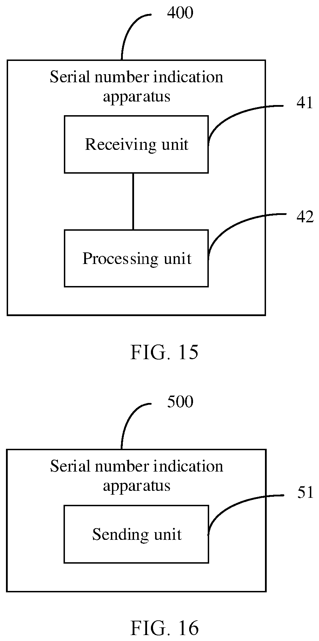

Based on a same concept as the foregoing serial number indication method, FIG. 15 further provides a schematic diagram of a structure of a serial number indication apparatus. The apparatus 400 includes a receiving unit 41 and a processing unit 42.

The receiving unit 41 is configured to receive first information from a second network apparatus, where the first information includes a second serial number.

The processing unit 42 is configured to determine a start serial number in an RLC entity of the first network apparatus based on the second serial number.

For specific implementations of the receiving unit 41 and the processing unit 42, refer to related descriptions of the first network apparatus in the serial number indication method shown in FIG. 8.

According to the serial number indication apparatus provided in this embodiment of this application, when a fault does not occur in the second network apparatus, the second network apparatus sends the second serial number to the apparatus, and the apparatus determines the start serial number in the RLC entity of the apparatus based on the second serial number. In this way, when the fault occurs in the second network apparatus, and the apparatus takes over the second network apparatus, a serial number in the RLC entity of the apparatus can be aligned with a serial number in an RLC entity of the first terminal apparatus, so that the first terminal apparatus can perform accurate combination based on the aligned serial numbers when receiving a data packet sent by the apparatus. This improves communication reliability.

Based on a same concept as the foregoing serial number indication method, FIG. 16 further provides a schematic diagram of a structure of a serial number indication apparatus. The apparatus 500 includes a sending unit 51.

The sending unit 51 is configured to send first information to a first network apparatus, where the first information includes a second serial number, and the second serial number is used to indicate a start serial number in an RLC entity of the first network apparatus.

Optionally, the sending unit 51 is specifically configured to send the first information to the first network apparatus when a largest serial number in an RLC entity of the apparatus is updated.

For specific implementations, refer to related descriptions of the second network apparatus in the serial number indication method shown in FIG. 8.

According to the serial number indication apparatus provided in this embodiment of this application, when a fault does not occur in the apparatus, the apparatus sends the second serial number to the first network apparatus, and the first network apparatus determines the start serial number in the RLC entity of the first network apparatus based on the second serial number. In this way, when the fault occurs in the apparatus, and the first network apparatus takes over the apparatus, a serial number in the RLC entity of the first network apparatus can be aligned with a serial number in an RLC entity of a first terminal apparatus, so that the first terminal apparatus can perform accurate combination based on the aligned serial numbers when receiving a data packet sent by the first network apparatus. This improves communication reliability.

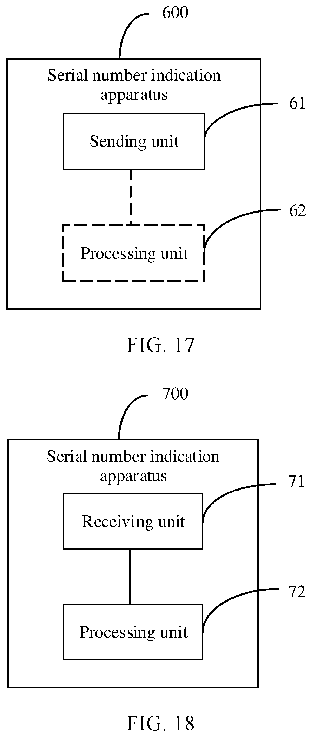

Based on a same concept as the foregoing serial number indication method, FIG. 17 further provides a schematic diagram of a structure of a serial number indication apparatus. The apparatus 600 includes a sending unit 61, and may further include a processing unit 62.

The sending unit 61 is configured to periodically send second information to a first network apparatus, where the second information includes a first serial number in an RLC entity, and the first serial number is used to indicate a start serial number in an RLC entity of the first network apparatus.

Optionally, the processing unit 62 is configured to start a timer. The sending unit 61 is specifically configured to send the second information to the first network apparatus after the timer expires. The processing unit 62 is further configured to restart the timer.

For specific implementations of the sending unit 61 and the processing unit 62, refer to related descriptions of the first terminal apparatus in the serial number indication method shown in FIG. 9.

According to the serial number indication apparatus provided in this embodiment of this application, the apparatus periodically sends the first serial number in the RLC entity to the first network apparatus, and the first network apparatus may determine the start serial number in the RLC entity of the first network apparatus based on the first serial number. In this way, a serial number in the RLC entity of the first network apparatus is aligned with a serial number in the RLC entity of the apparatus, so that the apparatus can perform accurate combination based on the aligned serial numbers when receiving a data packet sent by the first network apparatus. This improves communication reliability.

Based on a same concept as the foregoing serial number indication method, FIG. 18 further provides a schematic diagram of a structure of a serial number indication apparatus. The apparatus 700 includes a receiving unit 71 and a processing unit 72.

The receiving unit 71 is configured to receive second information periodically sent by a first terminal apparatus, where the second information includes a first serial number in an RLC entity. The processing unit 72 is configured to determine a start serial number in an RLC entity of the first network apparatus based on the first serial number.

For specific implementations of the receiving unit 71 and the processing unit 72, refer to related descriptions of the first network apparatus in the serial number indication method shown in FIG. 9.

According to the serial number indication apparatus provided in this embodiment of this application, the first terminal apparatus periodically sends the first serial number in the RLC entity to the apparatus, and the apparatus may determine the start serial number in the RLC entity of the apparatus based on the first serial number. In this way, a serial number in the RLC entity of the apparatus is aligned with a serial number in the RLC entity of the first terminal apparatus, so that the first terminal apparatus can perform accurate combination based on the aligned serial numbers when receiving a data packet sent by the apparatus. This improves communication reliability.

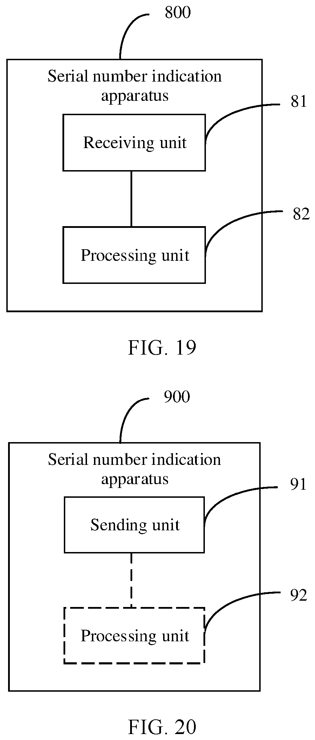

Based on a same concept as the foregoing serial number indication method, FIG. 19 further provides a schematic diagram of a structure of a serial number indication apparatus. The apparatus 800 includes a receiving unit 81 and a processing unit 82.

The receiving unit 81 is configured to receive third indication information from a first network apparatus, where the third indication information indicates RLC entity reestablishment or RLC entity resetting. The processing unit 82 is configured to perform, based on the third indication information, at least one of the following operations: initializing an RLC variable, initializing an RLC timer, clearing a buffer of an RLC entity, or discarding a data packet.

For specific implementations of the receiving unit 81 and the processing unit 82, refer to related descriptions of the first network apparatus in the serial number indication method shown in FIG. 10.

According to the serial number indication apparatus provided in this embodiment of this application, the apparatus initializes the RLC variable, clears the buffer of the RLC entity, or discards the data packet based on the indication information of the first network apparatus. In this way, a serial number in the RLC entity of the apparatus is aligned with a serial number in an RLC entity of the first network apparatus, so that the apparatus can perform accurate combination based on the aligned serial numbers when receiving a data packet sent by the first network apparatus. This improves communication reliability.

Based on a same concept as the foregoing serial number indication method, FIG. 20 further provides a schematic diagram of a structure of a serial number indication apparatus. The apparatus 900 includes a sending unit 91, and may further include a processing unit 92 (represented by a dashed line in the figure).

The sending unit 91 is configured to send third indication information to a first terminal apparatus, where the third indication information indicates RLC entity reestablishment or RLC entity resetting.

Optionally, the processing unit 92 is further configured to detect that a fault occurs in a second network apparatus, where the second network apparatus is a network apparatus that communicates with the first terminal apparatus before the fault occurs.

For specific implementations of the sending unit 91 and the processing unit 92, refer to related descriptions of the first network apparatus in the serial number indication method shown in FIG. 10.

According to the serial number indication apparatus provided in this embodiment of this application, the first terminal apparatus initializes an RLC variable, clears a buffer of an RLC entity, or discards a data packet based on the indication information of the apparatus. In this way, a serial number in the RLC entity of the first terminal apparatus is aligned with a serial number in an RLC entity of the apparatus, so that the first terminal apparatus can perform accurate combination based on the aligned serial numbers when receiving a data packet sent by the apparatus. This improves communication reliability.

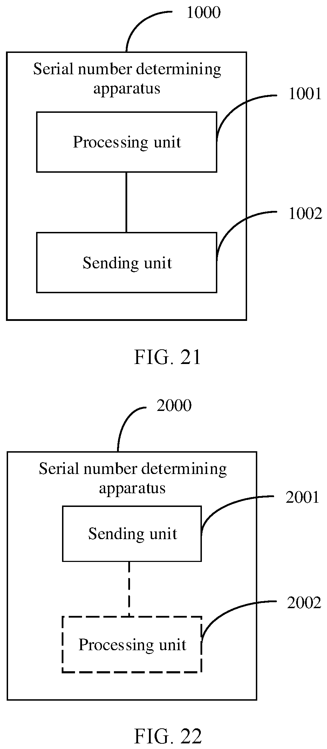

Based on a same concept as the foregoing serial number indication method, FIG. 21 further provides a schematic diagram of a structure of a serial number determining apparatus. The apparatus 1000 includes a processing unit 1001 and a sending unit 1002.

The processing unit 1001 is configured to determine a first data packet. The processing unit 1001 is further configured to determine, based on a packet data convergence protocol PDCP serial number corresponding to the first data packet, a radio link control RLC serial number corresponding to the first data packet. The processing unit 1001 is further configured to add the RLC serial number to an RLC header corresponding to the first data packet. The sending unit 1002 is configured to send the first data packet.

Optionally, the sending unit 1002 is further configured to send second indication information to a terminal apparatus, where the second indication information indicates that a data packet corresponding to at least one RLC serial number cannot be sent, or indicates the terminal apparatus to ignore receiving of the data packet corresponding to the at least one RLC serial number.

For specific implementations of the processing unit 1001 and the sending unit 1002, refer to related descriptions of the network apparatus in the serial number indication method shown in FIG. 12.

According to the serial number determining apparatus provided in this embodiment of this application, the apparatus determines, based on the PDCP serial number corresponding to the first data packet, the RLC serial number corresponding to the first data packet. In this way, an RLC layer and a PDCP layer of the apparatus process serial numbers in a consistent manner. When a fault occurs in the network apparatus, a case in which an RLC layer of the terminal apparatus receives a first data packet corresponding to a repeated serial number, and discards the first data packet does not occur. This improves communication reliability.

Based on a same concept as the foregoing serial number indication method, FIG. 22 further provides a schematic diagram of a structure of a serial number determining apparatus. The apparatus 2000 includes a receiving unit 2001, and may further include a processing unit 2002 (represented by a dashed line in the figure).

The receiving unit 2001 is configured to receive a first data packet from a network apparatus, where an RLC header of the first data packet includes an RLC serial number, and the RLC serial number corresponding to the first data packet is determined based on a packet data convergence protocol PDCP serial number corresponding to the first data packet.

Optionally, the receiving unit 2001 is further configured to receive second indication information from the network apparatus, where the second indication information indicates that a data packet corresponding to at least one RLC serial number cannot be sent, or indicates to ignore receiving of the data packet corresponding to the at least one RLC serial number. The processing unit 2002 is configured to: determine, based on the second indication information, to ignore the data packet that corresponds to the at least one RLC serial number and that cannot be sent, and continue to slide a receive window backwards.

For specific implementations of the receiving unit 2001 and the processing unit 2002, refer to related descriptions of the terminal apparatus in the serial number indication method shown in FIG. 12.

According to the serial number determining apparatus provided in this embodiment of this application, the network apparatus determines, based on the PDCP serial number corresponding to the first data packet, the RLC serial number corresponding to the first data packet. In this way, an RLC layer and a PDCP layer of the network apparatus process serial numbers in a consistent manner. When a fault occurs in the network apparatus, a case in which an RLC layer of the apparatus receives a first data packet corresponding to a repeated serial number, and discards the first data packet does not occur. This improves communication reliability.

It should be noted that the foregoing units or at least one of the units may be implemented by software, hardware, or a combination thereof. When any one of the units or the units is/are implemented by the software, the software exists in a form of computer program instructions, and is stored in a memory. A processor may be configured to execute the program instructions to implement the foregoing method procedures. The processor may be built in a system on chip (system on chip, SoC) or an ASIC, or may be an independent semiconductor chip. In addition to a core for executing software instructions to perform operations or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing units or the unit are/is implemented by the hardware, the hardware may be any one or any combination of a central processing unit (central processing unit, CPU), a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system. The chip system includes at least one processor and an interface. The at least one processor is coupled to a memory through the interface. When the at least one processor executes a computer program or instructions in the memory, the method according to any one of the foregoing method embodiments is performed. Optionally, the chip system may include a chip, or may include a chip and another discrete component. This is not specifically limited in embodiments of this application.

It should be understood that, in the descriptions of embodiments of this application, unless otherwise specified, "/" represents an "or" relationship between associated objects. For example, A/B may represent A or B, where A and B may be singular or plural. In addition, in the descriptions of embodiments of this application, unless otherwise stated, "a plurality of" means two or more than two. "At least one of the following items (pieces)" or a similar expression thereof indicates any combination of these items, including a single item (piece) or any combination of a plurality of items (pieces). For example, at least one (piece) of a, b, or c may indicate a, b, c, a and b, a and c, b and c, or a, b, and c, where a, b, and c each may be singular or plural. In addition, to clearly describe the technical solutions in embodiments of this application, terms such as "first" and "second" are used in an embodiment of embodiments of this application to distinguish between same items or similar items that have basically same functions and purposes. A person skilled in the art may understand that the terms such as "first" and "second" do not limit a quantity and an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or with "for example" in embodiments of this application shall not be explained as being more preferred or having more advantages than another embodiment or design scheme. Exactly, use of "example" or "for example" is intended to present a relative concept in a specific manner for ease of understanding.

All or some of the foregoing embodiments may be implemented by software, hardware, firmware, or any combination thereof. When a software program is used to implement embodiments, all or some of embodiments may be implemented in a form of a computer program product. The computer program product includes at least one computer instruction. When the computer program instruction is loaded and executed on a computer, all or some of the procedures or functions according to embodiments of this application are generated. The computer may be a general-purpose computer, a dedicated computer, a computer network, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center that integrates at least one usable medium. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

Although embodiments of this application are described herein with reference to embodiments, in a process of implementing embodiments of this application that claims protection, a person skilled in the art may understand and implement another variation of the disclosed embodiments by viewing the accompanying drawings, disclosed content, and the appended claims. In the claims, the term "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a great effect.

Although embodiments of this application are described with reference to specific features and embodiments thereof, it is clear that various modifications and combinations may be made to embodiments of this application without departing from the scope of the invention as defined by the claims. Correspondingly, the specification and the accompanying drawings are merely example descriptions of embodiments of this application that are defined by the appended claims, and are considered to cover any or all of modifications, variations or combinations within the scope of the invention. Clearly, a person skilled in the art can make various modifications and variations to embodiments of this application without departing from the scope of the invention. In this way, embodiments of this application are also intended to cover these modifications and variations provided that they fall within the scope of the claims.

## Claims

1. A serial number indication method, comprising:
receiving (S101), by a first terminal apparatus (103), first indication information from a first network apparatus (101), wherein the first indication information indicates the first terminal apparatus to report a first serial number in a radio link control, RLC, entity; and
sending (S102), by the first terminal apparatus, the first serial number in the RLC entity to the first network apparatus based on the first indication information, **characterized in that**:
the first serial number is used to indicate a start serial number in an RLC entity of the first network apparatus; and
the first serial number is a serial number of one or more RLC service data unit, SDU, segments received by the first terminal apparatus from a second network apparatus, and the first serial number is also a serial number of an RLC entity of the second network apparatus.

2. The method according to claim 1, wherein before the receiving (S101), by a first terminal apparatus (103), first indication information from a first network apparatus (101), a fault occurs in a second network apparatus (102), wherein the second network apparatus is a network apparatus that communicates with the first terminal apparatus before the fault occurs.

3. The method according to claim 1 or 2, wherein the first serial number is a largest value in one or more serial numbers in the RLC entity of the first terminal apparatus.

4. A serial number indication method, comprising:
sending (S101), by a first network apparatus (101), first indication information to a first terminal apparatus (103), wherein the first indication information indicates the first terminal apparatus to report a first serial number in a radio link control, RLC, entity;
receiving (S102), by the first network apparatus, the first serial number in the RLC entity from the first terminal apparatus; and
**characterized in that** the method further comprises:
determining (S103), by the first network apparatus, a start serial number in an RLC entity of the first network apparatus based on the first serial number;
and **in that** the first serial number is a serial number of one or more RLC service data unit, SDU, segments received by the first terminal apparatus from a second network apparatus, and the first serial number is also a serial number of an RLC entity of the second network apparatus.

5. The method according to claim 4, wherein before the sending (S101), by a first network apparatus (101), first indication information to a first terminal apparatus (103), the method further comprises:
detecting, by the first network apparatus, that a fault occurs in a second network apparatus (102), wherein the second network apparatus is a network apparatus that communicates with the first terminal apparatus before the fault occurs.

6. The method according to claim 4 or 5, wherein the first serial number is a largest value in one or more serial numbers in the RLC entity of the first terminal apparatus (103).

7. A first terminal apparatus (200), comprising:
a receiving unit (21), configured to receive first indication information from a first network apparatus (101), wherein the first indication information indicates the first terminal apparatus (103) to report a first serial number in a radio link control, RLC, entity; and
a sending unit (22), configured to send the first serial number in the RLC entity to the first network apparatus based on the first indication information, **characterized in that**
the first serial number is used to indicate a start serial number in an RLC entity of the first network apparatus; and
the first serial number is a serial number of one or more RLC service data unit, SDU, segments received by the first terminal apparatus from a second network apparatus, and the first serial number is also a serial number of an RLC entity of the second network apparatus.

8. The apparatus (200) according to claim 7, wherein before the receiving unit (21) receives the first indication information from the first network apparatus (101), a fault occurs in a second network apparatus (102), wherein the second network apparatus is a network apparatus that communicates with the first terminal apparatus (103) before the fault occurs.

9. The apparatus (200) according to claim 7 or 8, wherein the first serial number is a largest value in one or more serial numbers in the RLC entity of the first terminal apparatus (103).

10. A first network apparatus (300), comprising:
a sending unit (31), configured to send first indication information to a first terminal apparatus (103), wherein the first indication information indicates the first terminal apparatus to report a first serial number in a radio link control, RLC, entity;
a receiving unit (32), configured to receive the first serial number in the RLC entity from the first terminal apparatus; and
a processing unit (33),
**characterized in that** the processing unit is configured to determine a start serial number in an RLC entity of the first network apparatus (101) based on the first serial number;
and **in that** the first serial number is a serial number of one or more RLC service data unit, SDU, segments received by the first terminal apparatus from a second network apparatus, and the first serial number is also
a serial number of an RLC entity of the second network apparatus.

11. The apparatus (300) according to claim 10, wherein the processing unit (33) is further configured to detect that a fault occurs in a second network apparatus (102), wherein the second network apparatus is a network apparatus that communicates with the first terminal apparatus (103) before the fault occurs.

12. The apparatus (300) according to claim 10 or 11, wherein the first serial number is a largest value in one or more serial numbers in the RLC entity of the first terminal apparatus (103).

13. A computer-readable storage medium comprising instructions which, when executed by a processor of an apparatus, cause the device to carry out the method according to any one of claims 1 to 3.

14. A computer-readable storage medium comprising instructions which, when executed by a processor of an apparatus, cause the device to carry out the method according to any one of claims 4 to 6.

15. A communication system (1000), comprising the first terminal apparatus according to any one of claims 7-9 and the first network apparatus according to any one of claims 10 to 12.

## Patentansprüche

1. Verfahren zur Anzeige einer Seriennummer, umfassend:
Empfangen (S101), durch eine erste Endgerätevorrichtung (103), von ersten Anzeigeinformationen von einer ersten Netzwerkvorrichtung (101), wobei die ersten Anzeigeinformationen der ersten Endgerätevorrichtung anzeigen, eine erste Seriennummer in einer Funkverbindungssteuerungseinheit, RLC-Einheit, zu melden; und
Senden (S102), durch die erste Endgerätevorrichtung, der ersten Seriennummer in der RLC-Einheit an die erste Netzwerkvorrichtung auf der Grundlage der ersten Anzeigeinformationen, **dadurch gekennzeichnet, dass**:
die erste Seriennummer verwendet wird, um eine Startseriennummer in einer RLC-Einheit der ersten Netzwerkvorrichtung anzuzeigen; und
die erste Seriennummer eine Seriennummer eines oder mehrerer RLC-Dienstdateneinheiten-Segmente, RLC-SDU-Segmente ist, welche durch die erste Endgerätevorrichtung von einer zweiten Netzwerkvorrichtung empfangen werden, und die erste Seriennummer auch eine Seriennummer einer RLC-Einheit der zweiten Netzwerkvorrichtung ist.

2. Verfahren nach Anspruch 1, wobei vor dem Empfangen (S101), durch eine erste Endgerätevorrichtung (103), von ersten Anzeigeinformationen von einer ersten Netzwerkvorrichtung (101) ein Fehler in einer zweiten Netzwerkvorrichtung (102) auftritt, wobei die zweite Netzwerkvorrichtung eine Netzwerkvorrichtung ist, die mit der ersten Endgerätevorrichtung kommuniziert, bevor der Fehler auftritt.

3. Verfahren nach Anspruch 1 oder 2, wobei die erste Seriennummer ein größter Wert in einer oder mehreren Seriennummern in der RLC-Einheit der ersten Endgerätevorrichtung ist.

4. Verfahren zur Anzeige einer Seriennummer, umfassend:
Empfangen (S101), durch eine erste Netzwerkvorrichtung (101), von ersten Anzeigeinformationen an eine erste Endgerätevorrichtung (103), wobei die ersten Anzeigeinformationen der ersten Endgerätevorrichtung anzeigen, eine erste Seriennummer in einer Funkverbindungssteuerungseinheit, RLC-Einheit, zu melden;
Empfangen (S102), durch die erste Netzwerkvorrichtung, der ersten Seriennummer in der RLC-Einheit von der ersten Endgerätevorrichtung; und
**dadurch gekennzeichnet, dass** das Verfahren ferner Folgendes umfasst:
Bestimmen (S103), durch die erste Netzwerkvorrichtung, einer Startseriennummer in einer RLC-Einheit der ersten Netzwerkvorrichtung auf der Grundlage der ersten Seriennummer;
und dadurch, dass die erste Seriennummer eine Seriennummer eines oder mehrerer RLC-Dienstdateneinheiten-Segmente, RLC-SDU-Segmente ist, welche durch die erste Endgerätevorrichtung von einer zweiten Netzwerkvorrichtung empfangen werden, und die erste Seriennummer auch eine Seriennummer einer RLC-Einheit der zweiten Netzwerkvorrichtung ist.

5. Verfahren nach Anspruch 4, wobei das Verfahren vor dem Senden (S101), durch eine erste Netzwerkvorrichtung (101), von ersten Anzeigeinformationen an eine erste Endgerätevorrichtung (103) ferner Folgendes umfasst:
Erkennen, durch die erste Netzwerkvorrichtung, dass ein Fehler in einer zweiten Netzwerkvorrichtung (102) auftritt, wobei die zweite Netzwerkvorrichtung eine Netzwerkvorrichtung ist, die mit der ersten Endgerätevorrichtung kommuniziert, bevor der Fehler auftritt.

6. Verfahren nach Anspruch 4 oder 5, wobei die erste Seriennummer ein größter Wert in einer oder mehreren Seriennummern in der RLC-Einheit der ersten Endgerätevorrichtung (103) ist.

7. Erste Endgerätevorrichtung (200), umfassend:
eine Empfangseinheit (21), die dazu konfiguriert ist, erste Anzeigeinformationen von einer ersten Netzwerkvorrichtung (101) zu empfangen, wobei die ersten Anzeigeinformationen der ersten Endgerätevorrichtung (103) anzeigen, eine erste Seriennummer in einer Funkverbindungssteuerungseinheit, RLC-Einheit, zu melden; und
eine Sendeeinheit (22), die dazu konfiguriert ist, die erste Seriennummer in der RLC-Einheit auf der Grundlage der ersten Anzeigeinformationen an die erste Netzwerkvorrichtung zu senden, **dadurch gekennzeichnet, dass**
die erste Seriennummer verwendet wird, um eine Startseriennummer in einer RLC-Einheit der ersten Netzwerkvorrichtung anzuzeigen; und
die erste Seriennummer eine Seriennummer eines oder mehrerer RLC-Dienstdateneinheiten-Segmente, RLC-SDU-Segmente ist, welche durch die erste Endgerätevorrichtung von einer zweiten Netzwerkvorrichtung empfangen werden, und die erste Seriennummer auch eine Seriennummer einer RLC-Einheit der zweiten Netzwerkvorrichtung ist.

8. Vorrichtung (200) nach Anspruch 7, wobei, bevor die Empfangseinheit (21) die ersten Anzeigeinformationen von der ersten Netzwerkvorrichtung (101) empfängt, ein Fehler in einer zweiten Netzwerkvorrichtung (102) auftritt, wobei die zweite Netzwerkvorrichtung eine Netzwerkvorrichtung ist, die mit der ersten Endgerätevorrichtung (103) kommuniziert, bevor der Fehler auftritt.

9. Vorrichtung (200) nach Anspruch 7 oder 8, wobei die erste Seriennummer ein größter Wert in einer oder mehreren Seriennummern in der RLC-Einheit der ersten Endgerätevorrichtung (103) ist.

10. Erste Netzwerkvorrichtung (300), umfassend:
eine Sendeeinheit (31), die dazu konfiguriert ist, erste Anzeigeinformationen an eine erste Endgerätevorrichtung (103) zu senden, wobei die ersten Anzeigeinformationen der ersten Endgerätevorrichtung anzeigen, eine erste Seriennummer in einer Funkverbindungssteuerungseinheit, RLC-Einheit, zu melden;
eine Empfangseinheit (32), die dazu konfiguriert ist, die erste Seriennummer in der RLC-Einheit von der ersten Endgerätevorrichtung zu empfangen; und
eine Verarbeitungseinheit (33),
**dadurch gekennzeichnet, dass** die Verarbeitungseinheit dazu konfiguriert ist, eine Startseriennummer in einer RLC-Einheit der ersten Netzwerkvorrichtung (101) auf der Grundlage der ersten Seriennummer zu bestimmen;
und dadurch, dass die erste Seriennummer eine Seriennummer eines oder mehrerer RLC-Dienstdateneinheiten-Segmente, RLC-SDU-Segmente ist, welche durch die erste Endgerätevorrichtung von einer zweiten Netzwerkvorrichtung empfangen werden, und die erste Seriennummer auch eine Seriennummer einer RLC-Einheit der zweiten Netzwerkvorrichtung ist.

11. Vorrichtung (300) nach Anspruch 10, wobei die Verarbeitungseinheit (33) ferner dazu konfiguriert ist, zu erkennen, dass ein Fehler in einer zweiten Netzwerkvorrichtung (102) auftritt, wobei die zweite Netzwerkvorrichtung eine Netzwerkvorrichtung ist, die mit der ersten Endgerätevorrichtung (103) kommuniziert, bevor der Fehler auftritt.

12. Vorrichtung (300) nach Anspruch 10 oder 11, wobei die erste Seriennummer ein größter Wert in einer oder mehreren Seriennummern in der RLC-Einheit der ersten Endgerätevorrichtung (103) ist.

13. Computerlesbares Speichermedium, umfassend Anweisungen, die, wenn sie durch einen Prozessor einer Vorrichtung ausgeführt werden, die Einrichtung dazu veranlassen, das Verfahren nach einem der Ansprüche 1 bis 3 durchzuführen.

14. Computerlesbares Speichermedium, umfassend Anweisungen, die, wenn sie durch einen Prozessor einer Vorrichtung ausgeführt werden, die Einrichtung dazu veranlassen, das Verfahren nach einem der Ansprüche 4 bis 6 durchzuführen.

15. Kommunikationssystem (1000), umfassend die erste Endgerätevorrichtung nach einem der Ansprüche 7-9 und die erste Netzwerkvorrichtung nach einem der Ansprüche 10 bis 12.

## Revendications

1. Procédé d'indication de numéro de série, comprenant :
la réception (S101), par un premier appareil terminal (103), de premières informations d'indication à partir d'un premier appareil réseau (101), dans lequel les premières informations d'indication indiquent au premier appareil terminal de signaler un premier numéro de série dans une entité de commande de liaison radio, RLC ; et
l'envoi (S102), par le premier appareil terminal, du premier numéro de série dans l'entité RLC au premier appareil réseau sur la base des premières informations d'indication, **caractérisé en ce que** :
le premier numéro de série est utilisé pour indiquer un numéro de série de départ dans une entité RLC du premier appareil réseau ; et
le premier numéro de série est un numéro de série d'un ou plusieurs segments d'unité de données de service, SDU, RLC reçus par le premier appareil terminal à partir d'un second appareil réseau, et le premier numéro de série est aussi un numéro de série d'une entité RLC du second appareil réseau.

2. Procédé selon la revendication 1, dans lequel avant la réception (S101), par un premier appareil terminal (103), de premières informations d'indication à partir d'un premier appareil réseau (101), un défaut se produit dans un second appareil réseau (102), dans lequel le second appareil réseau est un appareil réseau qui communique avec le premier appareil terminal avant que le défaut ne se produise.

3. Procédé selon la revendication 1 ou 2, dans lequel le premier numéro de série est une valeur la plus grande parmi un ou plusieurs numéros de série dans l'entité RLC du premier appareil terminal.

4. Procédé d'indication de numéro de série, comprenant :
l'envoi (S101), par un premier appareil réseau (101), de premières informations d'indication à un premier appareil terminal (103), dans lequel les premières informations d'indication indiquent au premier appareil terminal de signaler un premier numéro de série dans une entité de commande de liaison radio, RLC ;
la réception (S102), par le premier appareil réseau, du premier numéro de série dans l'entité RLC à partir du premier appareil terminal ; et
**caractérisé en ce que** le procédé comprend également :
la détermination (S103), par le premier appareil réseau, d'un numéro de série de départ dans une entité RLC du premier appareil réseau sur la base du premier numéro de série ;
et **en ce que** le premier numéro de série est un numéro de série d'un ou plusieurs segments d'unité de données de service, SDU, RLC reçus par le premier appareil terminal à partir d'un second appareil réseau, et le premier numéro de série est aussi un numéro de série d'une entité RLC du second appareil réseau.

5. Procédé selon la revendication 4, dans lequel avant l'envoi (S101), par un premier appareil réseau (101), de premières informations d'indication à un premier appareil terminal (103), le procédé comprend également :
la détection, par le premier appareil réseau, qu'un défaut se produit dans un second appareil réseau (102), dans lequel le second appareil réseau est un appareil réseau qui communique avec le premier appareil terminal avant que le défaut ne se produise.

6. Procédé selon la revendication 4 ou 5, dans lequel le premier numéro de série est une valeur la plus grande parmi un ou plusieurs numéros de série dans l'entité RLC du premier appareil terminal (103).

7. Premier appareil terminal (200), comprenant :
une unité de réception (21), configurée pour recevoir de premières informations d'indication à partir d'un premier appareil réseau (101), dans lequel les premières informations d'indication indiquent au premier appareil terminal (103) de signaler un premier numéro de série dans une entité de commande de liaison radio, RLC ; et
une unité d'envoi (22), configurée pour envoyer le premier numéro de série dans l'entité RLC au premier appareil réseau sur la base des premières informations d'indication, **caractérisé en ce que**
le premier numéro de série est utilisé pour indiquer un numéro de série de départ dans une entité RLC du premier appareil réseau ; et
le premier numéro de série est un numéro de série d'un ou plusieurs segments d'unité de données de service, SDU, RLC reçus par le premier appareil terminal à partir d'un second appareil réseau, et le premier numéro de série est aussi un numéro de série d'une entité RLC du second appareil réseau.

8. Appareil (200) selon la revendication 7, dans lequel avant que l'unité de réception (21) ne reçoive les premières informations d'indication à partir du premier appareil réseau (101), un défaut se produit dans un second appareil réseau (102), dans lequel le second appareil réseau est un appareil réseau qui communique avec le premier appareil terminal (103) avant que le défaut ne se produise.

9. Appareil (200) selon la revendication 7 ou 8, dans lequel le premier numéro de série est une valeur la plus grande parmi un ou plusieurs numéros de série dans l'entité RLC du premier appareil terminal (103).

10. Premier appareil réseau (300), comprenant :
une unité d'envoi (31), configurée pour envoyer de premières informations d'indication à un premier appareil terminal (103), dans lequel les premières informations d'indication indiquent au premier appareil terminal de signaler un premier numéro de série dans une entité de commande de liaison radio, RLC ;
une unité de réception (32), configurée pour recevoir le premier numéro de série dans l'entité RLC à partir du premier appareil terminal ; et
une unité de traitement (33),
**caractérisé en ce que** l'unité de traitement est configurée pour déterminer un numéro de série de départ dans une entité RLC du premier appareil réseau (101) sur la base du premier numéro de série ;
et **en ce que** le premier numéro de série est un numéro de série d'un ou plusieurs segments d'unité de données de service, SDU, RLC reçus par le premier appareil terminal à partir d'un second appareil réseau, et le premier numéro de série est aussi un numéro de série d'une entité RLC du second appareil réseau.

11. Appareil (300) selon la revendication 10, dans lequel l'unité de traitement (33) est également configurée pour détecter qu'un défaut se produit dans un second appareil réseau (102), dans lequel le second appareil réseau est un appareil réseau qui communique avec le premier appareil terminal (103) avant que le défaut ne se produise.

12. Appareil (300) selon la revendication 10 ou 11, dans lequel le premier numéro de série est une valeur la plus grande parmi un ou plusieurs numéros de série dans l'entité RLC du premier appareil terminal (103).

13. Support de stockage lisible par ordinateur comprenant des instructions qui, lorsqu'elles sont exécutées par un processeur d'un appareil, amènent le dispositif à mettre en œuvre le procédé selon l'une quelconque des revendications 1 à 3.

14. Support de stockage lisible par ordinateur comprenant des instructions qui, lorsqu'elles sont exécutées par un processeur d'un appareil, amènent le dispositif à mettre en œuvre le procédé selon l'une quelconque des revendications 4 à 6.

15. Système de communication (1000), comprenant le premier appareil terminal selon l'une quelconque des revendications 7 à 9 et le premier appareil réseau selon l'une quelconque des revendications 10 à 12.
